# EUROPEAN PATENT APPLICATION

(11) **EP 4 851 850 A1**
(43) Date of publication of application: **09.12.2026**
(21) Application number: 26177955.7
(22) Date of filing: 11.05.2026
(51) Int. Cl.: G06F 40/35, G06F 40/30, G06F 40/56, G06F 40/253, G06N 3/0475

(54) **VECTOR EMBEDDING ANALYSIS FOR IMPROVED LANGUAGE MODEL RESPONSES**

(30) Priority: 03.06.2025 US 202519226562
(71) Applicant: NVIDIA Corporation, Santa Clara, CA 95051 (US)
(72) Inventor: LUCAS, Joseph Tran, Santa Clara, CA, 95051 (US)
(74) Representative: Kraus & Lederer PartGmbB

(57) **Abstract**

Disclosed are apparatuses, systems, and techniques that evaluate efficacy and/or safety of conversations supported by language models. The techniques include obtaining a sequence of embeddings, an individual embedding of the sequence of embeddings representing a respective exchange of a sequence of exchanges of a conversation involving a language model (LM), generating one or more metrics characterizing a trajectory defined by the sequence of embeddings in an embedding space, and determining, based on the one or more metrics, one or more efficacy or safety attributes of the conversation. The techniques further include causing, based at least on the one or more efficacy or safety attributes, execution of an action. The action includes interrupting the conversation, retraining the LM, or deploying of the LM for one or more additional conversations involving the LM.

## Description

### TECHNICAL FIELD

At least one embodiment pertains to computing resources used to perform and/or facilitate natural language technologies. For example, at least one embodiment pertains to systems and techniques that facilitate and improve quality of processing of user questions and queries by language models.

### BACKGROUND

Well-trained language models - such as large language models (LLMs) - are capable of supporting conversations in natural language, understanding speaker's intent and emotions, explaining complex topics, generating new texts upon receiving suitable prompts, writing and debugging software codes, providing advice regarding topics of interest to a user, processing image, audio, and/or other data types, and/or performing other functions. LLMs typically undergo self-supervised training on massive amounts of text data and/or other data types, depending on the embodiment, and learn to predict next and/or missing tokens (which may correspond to sub-words, symbols, words, etc.) in a phrase/sentence, detect intent and/or sentiment of a human speaker, determine if two sentences are related or unrelated, and/or perform other basic language tasks. Following the initial training, LLMs often undergo instructional (prompt-based) supervised fine-tuning that causes LLMs to acquire more in-depth language proficiency and/or master more specialized tasks. Supervised fine-tuning includes using learning prompts (questions, hints, etc.) that are accompanied by example texts (e.g., answers, sample essays, etc.) serving as training ground truth. In reinforcement fine-tuning, a human evaluator assigns grades indicative of a degree to which the generated text resembles human-produced texts.

### BRIEF DESCRIPTION OF DRAWINGS

FIG. 1 is a block diagram of an example computer system capable of implementing analysis of embedding trajectories for evaluation of alignment and/or safety of conversations supported by language models (LMs), according to at least one embodiment;
FIG. 2 illustrates an example computing device that supports evaluation of alignment and/or safety of conversations involving LMs using embedding trajectories, according to at least one embodiment;
FIGs. 3A-B illustrate operations of an embeddings sampler deployed as part evaluation of conversations involving LMs, according to at least one embodiment;
FIG. 4A illustrates an example trajectory associated with a multiexchange conversation between a user and an LM, according to at least one embodiment;
FIG. 4B illustrates an example deployment of positive and/or negative waypoints for evaluation of multiexchange conversations between a user and an LM, according to at least one embodiment;
FIG. 5 illustrates an example evaluation pipeline for evaluation of multiexchange user-LM conversations using trajectories in the embedding space, according to at least one embodiment;
FIG. 6 is a flow diagram of an example method of evaluating alignment and/or safety of conversations supported by language models using analysis of embedding trajectories, according to at least one embodiment;
FIG. 7A illustrates inference and/or training logic, according to at least one embodiment;
FIG. 7B illustrates inference and/or training logic, according to at least one embodiment;
FIG. 8 illustrates training and deployment of a neural network, according to at least one embodiment;
FIG. 9 is an example data flow diagram for an advanced computing pipeline, according to at least one embodiment;
FIG. 10 is a system diagram for an example system for training, adapting, instantiating and deploying machine learning models in an advanced computing pipeline, according to at least one embodiment;
FIG. 11A is a block diagram of an example generative language model system suitable for use in implementing at least some embodiments of the present disclosure;
FIG. 11B is a block diagram of an example generative language model that includes a transformer encoder-decoder suitable for use in implementing at least some embodiments of the present disclosure;
FIG. 11C is a block diagram of an example generative language model that includes a decoder-only transformer architecture suitable for use in implementing at least some embodiments of the present disclosure;
FIG. 12 is a block diagram of an example computing device suitable for use in implementing some embodiments of the present disclosure; and
FIG. 13 is a block diagram of an example data center suitable for use in implementing some embodiments of the present disclosure.

### DETAILED DESCRIPTION

Capabilities of language models (LMs) are, at least in part, determined by the amount and diversity of training data used to train the LMs. Yet even LMs trained on massive amounts of data can suffer from hallucinations (invocation of irrelevant or random information), factual inaccuracies, and/or other similar instances that diminish user experiences and reliability of LM outputs. In some instances, a user can ask questions that an LM is not well trained to answer. As a result, the responses generated by an LM can fail to adequately address the user's questions (queries) causing the user to repeat or reformulate questions while looking for more relevant information. The existing LM technology does not have automatic mechanisms that effectively identify situations where an LM's usefulness to a user has been exhausted and there is a need for a different conversational partner (e.g., a user or a human expert). The lack of such identification can lead to prolonged user-LM conversations that are of limited usefulness to the user and result in frustration, lowered user satisfaction, or inefficient or wasteful use of compute, infrastructure, and/or energy resources.

Furthermore, some prompts can be related to artificial intelligence (AI) safety. An example can be prompts that are a part of a malicious jailbreak attack during which an attacker attempts to manipulate an LM to produce a desired (e.g., offensive, misleading, fraudulent, etc.) output. For example, during a user-chatbot conversation, an attacker can try to intercept and supplement user prompts with additional information and/or instructions that hijack the chatbot's personality and cause the chatbot to respond in an inappropriate manner. In such instances, a pattern of the user-LM conversation often includes multiple LM-generated refusals (with similar content) to different user prompts before eventually the LM succumbs to an attack and furnishes information that is against an applicable policy.

Aspects and embodiments of the present disclosure address these and other technological challenges by providing for systems and techniques that analyze embedding trajectories to evaluate AI efficacy and AI safety in the context of conversations supported by language models. AI efficacy may include measures of efficiency for a language model to assist a user in achieving a goal, a task completion rate, a resolution or self-service rate, a user satisfaction score, fallback rate, misunderstanding rate / intent recognition rate, hallucination rate, or the like. AI safety may comprise a) AI Alignment, b) Robustness and Reliability, c) Misuse and Malicious Use, d) Societal and Ethical Impacts, or e) Catastrophic and Existential Risk. AI Alignment may comprise value alignment, goal misalignment, interpretability/explainability, or robustness to goal mis-generalization. Robustness and Reliability may include adversarial robustness, out-of-distribution (ood) detection, calibration, or software engineering for AI. Misuse and Malicious Use may include disinformation/propaganda, cybersecurity attacks, autonomous weapons systems (AWS), biosecurity/chemical weapons, social engineering/scams, or jailbreaking. Societal and Ethical Impacts may include bias and fairness, privacy, accountability and governance, economic impact, or environmental impact. Catastrophic and Existential Risk may include loss of control, power-seeking behavior, or unforeseen emergent behaviors.

In some embodiments of the present disclosure analysis of embedding trajectories is used in evaluation of efficacy and/or safety of conversations with a language model. More specifically, various exchanges (e.g., speaker turns, or changes; user queries and LM responses) in a user-LM conversation may be represented by respective embeddings (feature vectors) that capture semantic content of the exchanges. An embedding refers to any suitable digital representation of an input (e.g., user queries and/or LM responses) as a vector (string) of some number *N* of components, which may have integer values or floating-point values. Embeddings can be considered as vectors or points in an *N*-dimensional embedding space with the dimensionality *N* of the embedding space typically being smaller than the size of the input data. Embeddings may be generated using a suitable embedding network (e.g., a part of LM or a separate dedicated network). During training, the embedding network learns to associate similar inputs with similar embeddings represented by points closely situated in the embedding space and associate dissimilar inputs with points that are further apart in the embedding space. Correspondingly, a multiexchange user-LM conversation may be represented via a set of embeddings {*Vⱼ*} = *V*₁, *V*₂, ... *V_{N}* (or points in the embedding space) collectively referred to as the trajectory of the conversation, with *j* enumerating individual units of the conversation, e.g., all exchanges of the conversation or exchanges of one of the parties to the conversation (e.g., user's queries, LM's responses). A trajectory analysis module may access the set of embeddings {*Vⱼ*} and compute various metrics characterizing a degree to which the trajectory meanders across the embedding space.

In some embodiments, such trajectory metrics can include the reach (extent, or displacement) of the trajectory, *R* = (*V_{N}* - *V*₁)², computed as the square of the Euclidean distance between the final *V_{N}* and the initial *V*₁ embeddings. In some embodiments, the metrics can include the total length of the trajectory, e.g., defined as the sum of the displacements of individual exchanges, ${L}_{tot} = {\sum }_{j = 1}^{N} {\left({V}_{j}-{V}_{j - 1}\right)}^{2}$. In some instances, the reach of the trajectory can be normalized to the number of exchanges *N: R_{N}* = (*V_{N}* - *V*₁)²/*N*. In other instances, the reach of the trajectory can be normalized to the total length of the trajectory, *R_{L}* = (*V_{N}* - *V*₁)²/*Lₜₒₜ*. Yet in other embodiments, a exchange length *Lⱼ* = (*Vⱼ - V*_{*j*-1})², may be defined for an individual (*j*th) exchange of the conversation. The exchange length may be normalized relative to the length of the embeddings, e.g., *LNⱼ* = (*Vⱼ* - *V*_{*j*-1})²/(|*Vⱼ*||*V*_{*j*-1}|), such that embeddings with larger norms |*Vⱼ*| may be more directly compared to embeddings with smaller norms. In some embodiments, the average (normalized) exchange length can be computed for the trajectory, e.g., ${L}_{av} = {N}^{- 1} {\sum }_{j = 1}^{N} {LN}_{j}$.

The trajectory metrics may be used in a variety of ways, both for live monitoring and offline evaluation of LM's performance. For example, a multiexchange conversation with a small reach-to-length ratio *R_{L}* (e.g., for at least a minimum number of exchanges *Nₘᵢₙ*) may indicate that the user is not receiving responses from the LM that adequately address the user's questions. When such conversations are detected in live monitoring, the user may be directed to a different LM or to a human agent. When such situations are detected in offline evaluation, the recorded conversations may be reviewed by a human developer for determination whether the LM's responses lack sufficient knowledge, clarity, and/or relevance. If it is determined that the LM's responses were sub-optimal, the LM may be directed to additional retraining in customer interactions and/or the relevant knowledge area. In some embodiments, metrics such as *R_{L}* and/or *Lₐᵥ* may be collected for all or any fraction (e.g., randomly sampled) of all conversations and analyzed to evaluate the quality of service provided by the LM with higher reach-to-length ratios *R_{L}* and/or average exchange length *Lₐᵥ* indicating higher quality and lower *R_{L}* and/or *Lₐᵥ* indicating lower quality of service. In some embodiments, such quality-of-service evaluations may be performed in testing of multiple different models or similar models trained using different training datasets. The collected trajectory metrics may distinguish more efficient models/training datasets from less efficient models/training datasets.

In some embodiments, certain "red zones" may be set in the embedding space, e.g., by generating one or inputs/outputs with content indicative of user's queries and/or LM's responses that violate one or more use policies set up by a provider of LM services and computing embeddings of those inputs/outputs, which then serve as policy sentinels. A certain region-red zone-may be identified in the embedding space, e.g., corresponding to embeddings that are less than a threshold distance (e.g., Euclidean distance) from one or more policy sentinels or negative waypoints, e.g., embedded blobs of texts associated with one or more use policy violations. A conversation whose trajectory moves into one or the red zones may be flagged for review and/or interruption. Similarly, in offline evaluation, LMs may be evaluated on how effectively the LMs avoid red zones and/or leave the red zone if trajectories of user's queries move to those zones.

Conversely, in some embodiments, certain user inputs may be indicative of user's satisfaction with LM's replies. Such inputs may also be embedded and placed in the embedding space as positive waypoints. In offline LM evaluations, the efficacy of LMs may be assessed by how often and/or how quickly an LM reaches a "green zone," e.g., a region of the embedding space that is within a set distance from one of the positive waypoints.

In some embodiments, trajectory metrics may serve as indicators of malicious attacks. For example, a small reach-to-length ratios *R_{L}* observed for a portion of a conversation followed by a significant leap in the embedding space may indicate that an attacker succeeded in eliciting prohibited information from an LM after a number of unsuccessful jailbreaking attempts, especially if at least some of the user's queries happen to be in the red zones. If such sudden changes in the trajectories are detected during live conversations, the LM may be directed to interrupt (e.g., pause, or stop) the conversation with the user, e.g., by advising the user that the conversation is against the use policy and/or recommending other resources to the user (including directing the user to a human customer service representative). In offline assessment of LM performance, the LM may be scheduled for additional fine-tuning of its guardrail capabilities.

In yet other embodiments, trajectory metrics may be directly used in training or fine-tuning of LMs. For example, a substantial number of user-LM conversations may be stored for later evaluation. Various stored conversations may be clustered in the space of trajectory metrics, e.g., reach-to-length ratio *R_{L}*, the average exchange length *Lₐᵥ*, and/or other metrics. Some number (e.g., 10%, 15%, etc.) of user-LM conversations associated with each cluster may then be reviewed and annotated by a human developer, e.g., with various classifications "effective/ineffective response," "accurate/imprecise response," "clear/unclear response," and/or the like. Other conversations of the same clusters in the space of trajectory metrics may then receive similar annotations and the whole set of annotated conversations may be used for retraining of the LM as examples of responses that are to be avoided or, conversely, reinforced.

The advantages of the disclosed techniques include but are not limited to live and offline analysis of conversations for improvement of performance of language models. In live processing, the disclosed techniques enable mid-conversation detection of ineffective LM performances and redirection of conversations towards more effective LMs (or human agents) and/or detection and blocking of unsecure conversations and/or conversations that violate policies. In offline processing, analysis of completed trajectories determines efficacy of various LMs, compares different models, and potentially modifies application configurations, including system prompts. Additionally, evaluation of models' efficacy can be performed using embeddings as proxies without revealing private content of the conversations.

### SYSTEM ARCHITECTURE

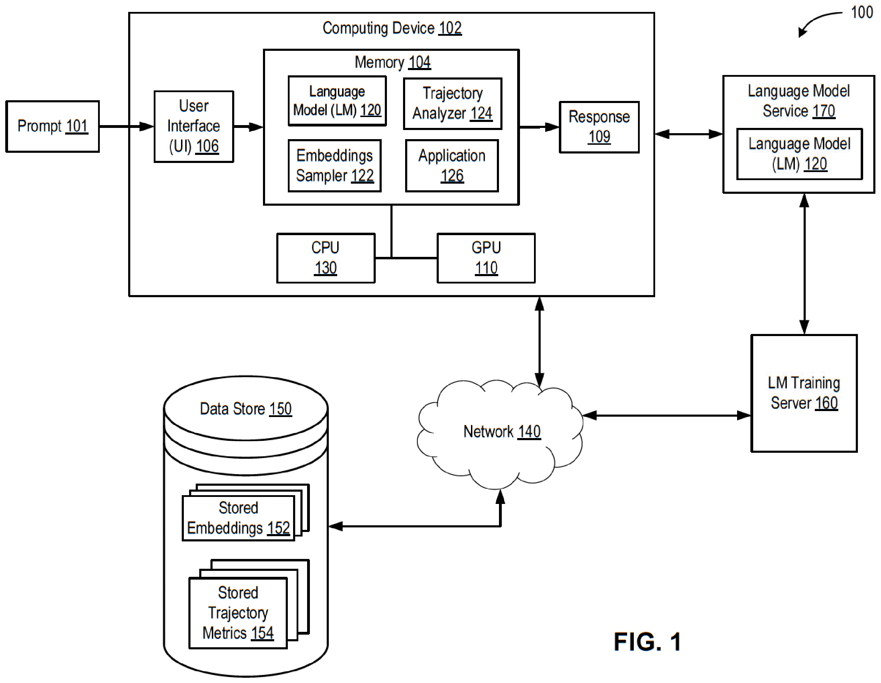

FIG. 1 is a block diagram of an example computer system 100 capable of implementing analysis of embedding trajectories for evaluation of efficacy and/or safety of conversations supported by language models, according to at least one embodiment. As depicted in FIG. 1, computer system 100 may include a computing device 102, a data store 150, and an LM training server 160 connected to a network 140. Network 140 may be a public network (e.g., the Internet), a private network (e.g., a local area network (LAN), or wide area network (WAN)), a wireless network, a personal area network (PAN), a combination thereof, and/or another network type.

Computing device 102 may include a desktop computer, a laptop computer, a smartphone, a tablet computer, a server, a wearable device, a virtual/augmented/mixed reality headset or head-up display, a digital avatar or chatbot kiosk, an in-vehicle infotainment computing device, and/or any suitable computing device capable of performing the techniques described herein. Computing device 102 may be configured to receive a prompt 101 that may be any human-generated or machine-generated data capable of being used, directly or after a suitable preprocessing, as an input into an LM 120. In some embodiments, LM 120 may be an LLM, e.g., a model with hundreds of millions or even more, e.g., billions of learned parameters. Prompt 101 may include a text (e.g., a sequence of one or more typed words), a speech (e.g., a sequence of one or more spoken words), an image (e.g., a drawing or a picture), a video or series of images, a tokenized sequence of sensor data, and/or any combination thereof. Prompt 101 may be generated as part of interaction of any user (including a computing program or any other machine user) with any entity that deploys, uses, and/or interfaces to LM 120. Such an entity may include a chatbot, a digital avatar, a digital assistant, an in-vehicle communication system, a gaming application, and/or any other digital agent capable of using a natural language prompt. The interaction may include a private conversation, a customer-agent session, a browsing session, an information-gathering session, a research inquiry, a multi-speaker conversation, a public conversation, a work session, and/or any combination thereof. Prompt 101 may be formulated as a statement, a query, a question, a request for explanation/tutorial, a request for advice, an expression of emotion, a narrative (or a portion of a narrative), and/or any other type of input that calls for a response from LM 120, and/or the like. In some embodiments, prompt 101 may include text and/or speech generated by a computer, e.g., any language model that is different from LM 120. As part of a multiexchange conversation, LM 120 may receive and respond to multiple prompts 101.

Prompt 101 may be received via any suitable user interface (UI) 106, which may include one or more devices of various modalities. For example, prompt 101 may be received via a keyboard, a touchscreen, a touchpad, a writing pad, a graphical interface, a mouse, a stylus, and/or using any other pointing device capable of selecting words/phrases that are displayed on a screen, and/or some other suitable device. In some embodiments, UI 106 may include an audio device, e.g., a microphone, a video device, such as a digital camera to capture a video prompt, a sequence of two or more images (video frames). In some embodiments, text, speech, and/or video input devices may be integrated together (e.g., into a smartphone, tablet computer, desktop computer, and/or the like).

Prompt 101 may be captured live (e.g., be typed, recorded, etc.) using one or more peripheral devices connected to computing device 102 (e.g., keyboard, microphone, digital camera), retrieved from memory 104 of computing device 102, and/or received over any local or network connection (e.g., via network 140) from an external computing device. Text prompt(s) 101 may be in any suitable text format, e.g., plain text format, a document format (DOC), a Rich Text Format (RTF), a Hypertext Markup Language (HTML) format, an Extensible Markup Language (XML) format, a Portable Document Format (PDF), and/or the like. Speech prompt(s) 101 may be in any suitable audio format, e.g., WAV, AIFF, MP3, AAC, WMA, or any other compressed or uncompressed audio format. Likewise, video prompt(s) 101 may be in any suitable video format, e.g., raw video data format, MPEG-4 format, MOV format, WMV format, AVI format, or any other compressed or uncompressed video format.

Computing device 102 may include a memory 104 (e.g., one or more memory devices or units) communicatively coupled to one or more processing devices, such as one or more graphics processing units (GPU) 110, one or more central processing units (CPU) 130, one or more data processing units (DPU), one or more parallel processing units (PPUs), and/or other processing devices (e.g., field-programmable gate arrays (FPGAs), application-specific integrated circuits (ASICs), and/or the like). Memory 104 may include a read-only memory (ROM), a flash memory, a dynamic random-access memory (DRAM), such as synchronous DRAM (SDRAM), a static memory, such as static random-access memory (SRAM), and/or some other memory capable of storing digital data. Memory 104 may store LM 120, an embeddings sampler 122, a trajectory analyzer 124, and an application 126. Application 126 may include any software that leverages capabilities of LM 120 to provision natural language services to users. For example, application 126 may include a chatbot application, a browser application, a digital avatar application, a digital assistant application, a chatbot application, and/or the like. Embeddings sampler 122 may include an application programming interface (API) to LM 120 and may receive embeddings of prompts 101 generated by a front end of LM 120 and embeddings of responses 109 generated by a back end of LM 120 (e.g., a layer of neurons that precedes a final token predictor, such as a softmax classifier). In some embodiments, embeddings sampler 122 may include an embeddings network that is external to LM 120. Trajectory analyzer 124 may implement various analysis techniques of the instant disclosure. For example, trajectory analyzer 124 may determine trajectory metrics characterizing a trajectory defined by embeddings obtained by embeddings sampler 122. The trajectory metrics may include a reach of the trajectory over a sequence of exchanges of a conversation, which may be normalized by a number of exchanges of the sequence, a length of the trajectory, an average length associated with one exchange of the sequence and/or the like, a proximity of LM's response to one or more favored locations (green zones) or disfavored locations (red zones) in the embedding space, and/or the like.

Trajectory analyzer 124 may use the determined trajectory metrics to compute one or more efficacy attributes of the conversation, e.g., a degree of responsiveness of the LM to user's prompts/queries, a degree of compliance of one or more responses of the LM with a policy (or multiple policies) associated with the LM, and/or the like. An action engine (not shown in FIG. 1) may initiate, based on the computed efficacy attributes, one or more actions related to the LM. Such actions may include interrupting the conversation, e.g., if efficacy attributes indicate that LM is experiencing a malicious attack and succumbing (or is in danger of succumbing) to such an attack or if the LM's contributions to the conversation are unresponsive to user's queries. Interrupting the conversation may include redirecting the conversation to another LM or a human agent. The actions may further include retraining the LM, if the efficacy attribute(s) indicate ineffective LM responses. The actions may also include continued deployment of LM for additional conversations (e.g., with other users and/or customers), e.g., responsive to the efficacy attribute(s) indicate effective LM responses.

In some embodiments, LM 120 may be a model that is trained and deployed by an external (relative to computing device 102) entity, e.g., language model service 170, which may be a cloud service, a subscription service, and/or some combination thereof. In some embodiments, LM 120 may be trained by LM training server 160. In some embodiments, LM 120 (and/or other deployed language models) may be or include a large language model (LLM). LM 120 may be trained to capture syntax and semantics of human language, e.g., by predicting a next, a previous, and/or a missing word in a sequence of words (e.g., one or more sentences of a human speech or text). LM 120 may be further trained using training data containing a large number of texts, such as human dialogues, newspaper texts, magazine texts, book texts, web-based texts, and/or any other texts. Since ground truth for such training is embedded in the texts themselves, LM training server 160 may use such texts for self-supervised training of LM 120. This teaches LM 120 how to carry out a conversation with a user (a human user or a computer) in a natural language in a manner that closely resembles a dialogue with a human speaker, including understanding the user's intent and responding in ways that the user expects from a conversational partner.

Following the initial self-supervised training, LM training server 160 may implement instructional (e.g., prompt-based) training of LM 120, e.g., supervised fine-tuning that causes LM 120 to acquire an in-depth language proficiency and/or master more specialized tasks. Supervised fine-tuning may include learning prompts (questions, hints, etc.) that are accompanied by example texts (e.g., answers, sample essays, etc.) used as the training ground truth. In some embodiments, LM training server 160 may further implement reinforcement training where a human evaluator assigns grades indicating a degree to which the generated text resembles a human-produced text.

In some embodiments, LM training server 160 may train multiple LMs 120, which may be models that differ by a number of neurons, number of neuron layers, specific neural architecture, and/or the like. Various trained LMs 120 may be trained (e.g., fine-tuned) using specialized texts, e.g., medical texts, mathematical texts, scientific texts, computer technology texts, and/or the like.

LM 120 may be implemented using neural networks with a large number (e.g., billions) of artificial neurons. In at least one embodiment, LM 120, and/or other deployed models, may be implemented as deep learning neural networks having multiple levels of linear and non-linear operations. For example, LM 120 may include convolutional neural networks, recurrent neural networks, fully-connected neural networks, long short-term memory (LSTM) neural networks, neural networks with attention, e.g., transformer neural networks, a combination of a convolutional network and one or more transformers (a conformer), and/or neural networks of other types. In at least one embodiment, LM 120 may include multiple neurons, with an individual neuron receiving its input from other neurons and/or from an external source and producing an output by applying an activation function to the sum of weighted (using trainable weights) inputs and, possibly, a bias value. In at least one embodiment, LM 120 may include multiple neurons arranged in layers, including an input layer, one or more hidden layers, and/or an output layer. Neurons from adjacent layers may be connected by weighted edges.

Initially, parameters (e.g., edge weights and biases) of LM(s) 120 may be assigned some starting (e.g., random) values. For various training inputs, LM training server 160 may cause LM(s) 120 to generate training output(s). LM training server 160 may then compare training output(s) with the desired target output(s). The resulting error or mismatch, e.g., the difference between the target output(s) and the training output(s), may be backpropagated through various neural layers of LM(s) 120, and the weights and biases of LM(s) 120 may be adjusted to make the training outputs closer to the target (ground truth) outputs. This adjustment may be repeated until the output error for a given training input satisfies a predetermined condition (e.g., falls below a predetermined value). Subsequently, a different training input may be selected, a new training output generated, and a new series of adjustments implemented, until LM(s) 120 is trained to a target degree of accuracy or until LM(s) 120 converges to a limit of its (architecture-defined) accuracy.

In some embodiments, evaluation of efficacy and/or safety of conversations supported by LM 120 may be performed offline, with embeddings sampled by embeddings sampler 122 and/or computed trajectory metrics stored in data store 150. Subsequent, trajectory analyzer 124 and/or LM training server 160 may retrieve stored embeddings 152 and/or stored trajectory metrics 154 from data store 150 and perform the evaluation. Following a determination that responses of LM 120 lack sufficient efficacy or resilience against malicious attacks, LM training server 160 may identify suitable training data to retrain LM 120 and improve LM's efficacy/resilience.

Data store 150 may be accessed by LM training server 160 and/or computing device 102 directly (e.g., via a bus, interconnect, and/or the like) or (as shown in FIG. 1) via network 140. Data store 150 may include a persistent storage capable of storing audio files as well as metadata for the stored audio files. Data store 150 may be hosted by one or more storage devices, such as main memory, magnetic or optical storage disks, tapes, or hard drives, network-attached storage (NAS), storage area network (SAN), and so forth. Although depicted as separate from LM training server 160 and/or computing device 102, in at least some embodiments, data store 150 may be a part of LM training server 160 and/or computing device 102. In at least some embodiments, data store 150 may be a network-attached file server, while in other embodiments data store 150 may be some other type of persistent storage, such as an object-oriented database, a relational database, and so forth, that may be hosted by LM training server 160 and/or computing device 102 or one or more different machines coupled to LM training server 160 and/or computing device 102 via network 140.

In at least one embodiment, LM training server 160 and computing device 102 may be implemented on a single computing device. LM training server 160 and/or computing device 102 may be (and/or include) a rackmount server, a router computer, a personal computer, a laptop computer, a tablet computer, a desktop computer, a media center, or any combination thereof.

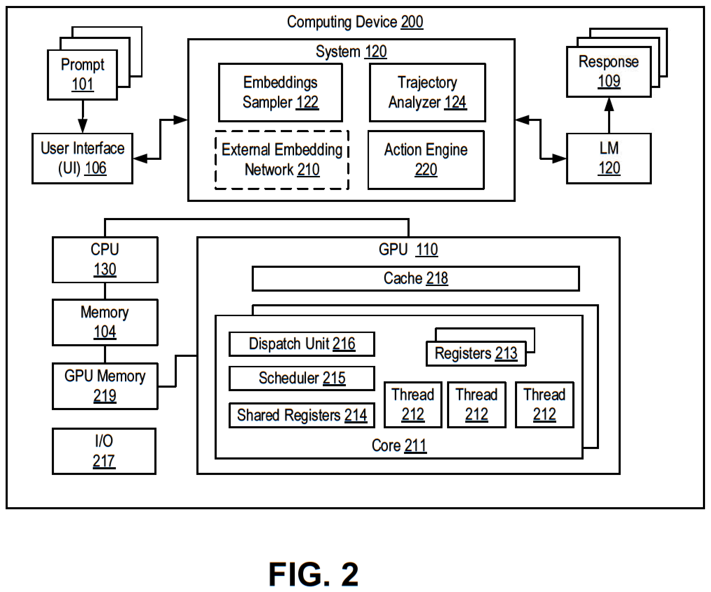

FIG. 2 illustrates an example computing device 200 that supports evaluation of efficacy and/or safety of conversations involving LMs using embedding trajectories, according to at least one embodiment. In at least one embodiment, computing device 200 may be a part of computing device 102. In at least one embodiment, computing device 200 may be a part of LM training server 160. In at least one embodiment, computing device 200 executes an embeddings sampler 122 that obtains embeddings generated by internal networks of LM 120 or by processing prompts 101 and/or responses 109 using an external embedding network 210. Computing device 200 may further execute trajectory analyzer 124 that generates, based on embeddings obtained from LM 120 and/or external embedding network 210, trajectory metrics and determines, based on the trajectory metrics, efficacy attribute(s) associated with user-LM conversations. Computing device 200 may further support an action engine 220 that performs one or more suitable actions based on the efficacy attribute(s), e.g., interrupting conversations, scheduling retraining of LM 120, validating LM 120 for further deployment, and/or the like. Operations of embedding sampler 122, trajectory analyzer 124, external embedding network 210, and/or action engine 220 may be performed in conjunction with evaluation of a multiexchange conversation that include multiple prompts 101 received from a user and multiple responses 109 generated by LM 120. Responses 109 may include text responses, speech (voice) responses, e.g., a text response that is additionally converted into speech via a text-to-speech processing, and/or the like.

Operations of embedding sampler 122, trajectory analyzer 124, external embedding network 210, and/or action engine 220 may be executed using one or more GPUs 110, one or more CPUs 130, one or more parallel processing units (PPUs) or accelerators, such as a deep learning accelerator, data processing units (DPUs), and/or the like. In at least one embodiment, a GPU 110 includes multiple cores 211, each core being capable of executing multiple threads 212. Each core may run multiple threads 212 concurrently (e.g., in parallel). In at least one embodiment, threads 212 may have access to registers 213. Registers 213 may be thread-specific registers with access to a register restricted to a respective thread. Additionally, shared registers 214 may be accessed by one or more (e.g., all) threads of the core. In at least one embodiment, each core 211 may include a scheduler 215 to distribute computational tasks and processes among different threads 212 of core 211. A dispatch unit 216 may implement scheduled tasks on appropriate threads using correct private registers 213 and shared registers 214. Computing device 200 may include input/output component(s) 217 to facilitate exchange of information with one or more users or developers.

In at least one embodiment, GPU 110 may have a (high-speed) cache 218, access to which may be shared by multiple cores 211. Furthermore, computing device 200 may include a GPU memory 219 where GPU 110 may store intermediate and/or final results (outputs) of various computations performed by GPU 110. After completion of a particular task, GPU 110 (or CPU 130) may move the output to (main) memory 104. In at least one embodiment, CPU 130 may execute processes that involve serial computational tasks whereas GPU 110 may execute tasks (such as multiplication of inputs of a neural node by weights and adding biases) that are amenable to parallel processing. In at least one embodiment, trajectory analyzer 124 and/or LMs 120 may determine which processes are to be executed on GPU 110 and which processes are to be executed on CPU 130. In other embodiments, CPU 130 may determine which processes are to be executed on GPU 110 and which processes are to be executed on CPU 130.

### SYSTEMS AND TECHNIQUES FOR ANALYSIS OF EMBEDDING TRAJECTORIES

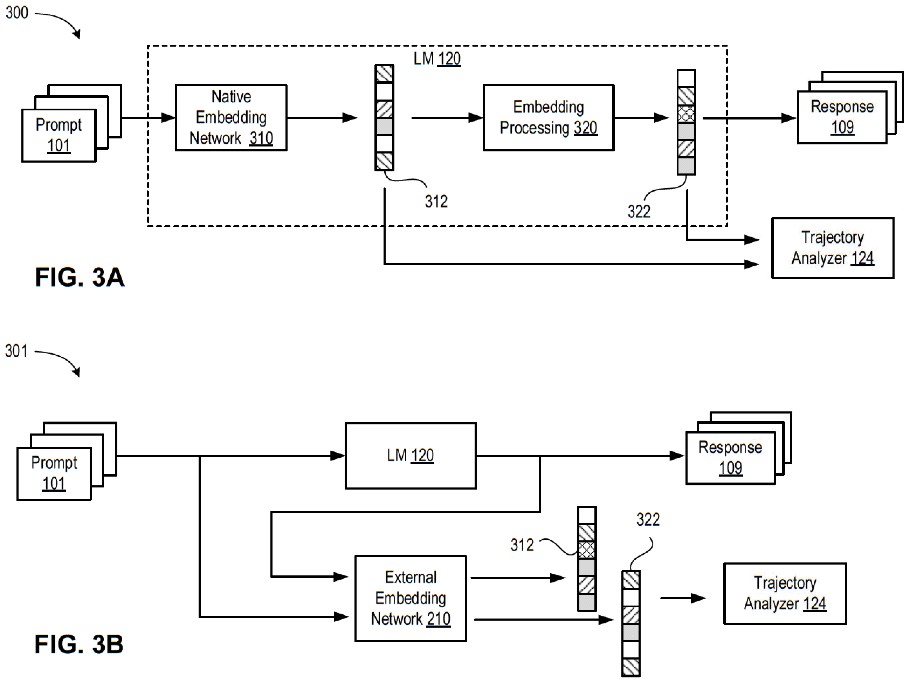

FIGs. 3A-B illustrate operations 300 of an embeddings sampler deployed as part evaluation of conversations involving LMs, according to at least one embodiment. In at least one embodiment, the embeddings sampler can be embeddings sampler 122 of FIG. 1 and FIG. 2. FIG. 3A illustrates embedding sampling operations performed in the instances where access to internal outputs of LM 120 is enabled. As shown, prompt 101 may be processed by a native embedding network 310 of LM 120 that converts prompt 101 into a prompt embedding 312, which may be a vector having any number M of components (e.g., integer format components or floating-point components) defined as part of the embedding network architecture. In some embodiments, M may be a large number, e.g., several hundreds or even thousands. During training, native embedding network 310 learns to associate similar prompts 101 with similar prompt embeddings 312. Prompts 101 having similar content may be represented by similar embeddings (e.g., embeddings separated by a relatively small Euclidean distance) even in those instances where dissimilar language (words, phrases) is used to express similar thoughts. Conversely, dissimilar prompt embeddings 312 (e.g., separated by large Euclidean distances) corresponds to prompts 101 of different content. In some embodiments, native embedding network 310 may be trained prior to training of LM 120. In some embodiments, native embedding network 310 may be trained together with LM 120. Prompt embedding 312 may be processed by various layers and blocks of neurons of LM 120, referred to jointly as embedding processing 320. Embedding processing 320 generates a response embedding 322 that is used to generate response 109 of the LM 120 to prompt 101. Response embedding 322 may be converted to response 109 using one or more additional blocks of neurons (not shown in FIG. 3A), e.g., a classifier that predicts probabilities (or log-probabilities) for various vocabulary tokens of LM 120 to be present in response 109, search algorithms (e.g., beams search algorithms) that search through various predictions of the classifier and select the most likely hypotheses, and/or perform various other operations. Prompt embeddings 312 and response embeddings 322 may be collected for subsequent processing by trajectory analyzer 124.

FIG. 3B illustrates embedding sampling operations 301 performed in the instances where access to internal outputs of LM 120 is disabled. For example, a provider of LM 120 may maintain architecture and internal data flows of LM 120 secret. In such instances, an external embedding network 210 may be deployed. External embedding network 310 may operate substantially as described above in conjunction with native embedding network 310 of FIG. 3. External embedding network 310 may receive a copy of prompt 101 and generate a prompt embedding 312. Similarly, external embedding network 310 may receive a copy of response 109 and generate a response embedding 322. Prompt embeddings 312 and response embeddings 322 may be collected for subsequent processing by trajectory analyzer 124. A number *M'* and/or format of components of embeddings generated by external embedding network 310 need not be the same as the number *M* and/or format of components generated by the native embedding network 310 of LM 120.

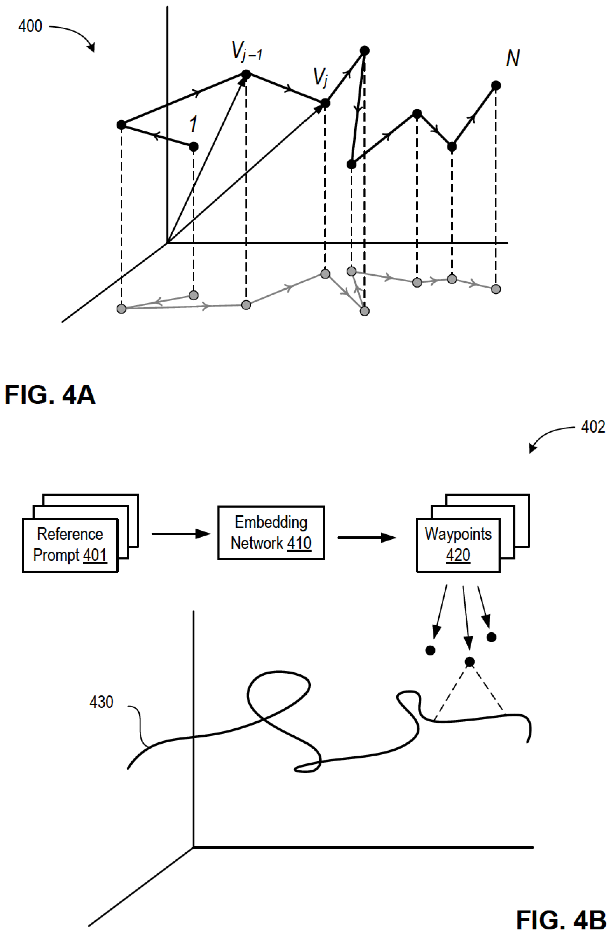

FIG. 4A illustrates an example trajectory 400 associated with a multiexchange conversation between a user and an LM, according to at least one embodiment. Example trajectory 400 may be represented via a set of points (illustrated with black dots) in an *M-*dimensional embedding space (illustrated schematically using a three-dimensional visualization). Individual points correspond to respective embeddings *Vⱼ*, where *j* enumerates units of the conversation. In some embodiments, all exchanges of the conversation (e.g., both user's queries and LM's responses) may be represented via embeddings {*Vⱼ*}. In other embodiments, exchanges of one of the parties to the conversation (e.g., user's queries or LM's responses) may be embedded via embeddings {*Vⱼ*}.

FIG. 4B illustrates an example deployment 402 of positive and/or negative waypoints for evaluation of multiexchange conversations between a user and an LM, according to at least one embodiment. In some embodiments, one or more reference prompts 401 may be prepared (e.g., by a human developer or another LM) and embedded using an embedding network 410 (which may be a native embedding network 310, with reference to FIG. 3A, or an external embedding network 210, with reference to FIG. 3B) as a set of waypoints (reference points) 420. Negative waypoints may be obtained by embedding reference prompts 401 that violate one or more LM use policies (e.g., as may be defined by a provider of LM services). Positive waypoints may be obtained by embedding reference prompts 401 indicative of user's satisfaction with LM's responses.

Trajectory metrics associated with an example trajectory 430 in the embedding space may include proximity of various points of the trajectory to positive and/or negative waypoints or certain regions drawn around positive waypoints (green zones) and/or negative waypoints (red zones). The efficacy attributes determined from the trajectory metrics may reflect how effectively an LM avoids red zones and/or leaves the red zones if trajectories of user's queries lead to the red zones. Similarly, the efficacy attributes may reflect how often and/or how quickly an LM reaches the green zones.

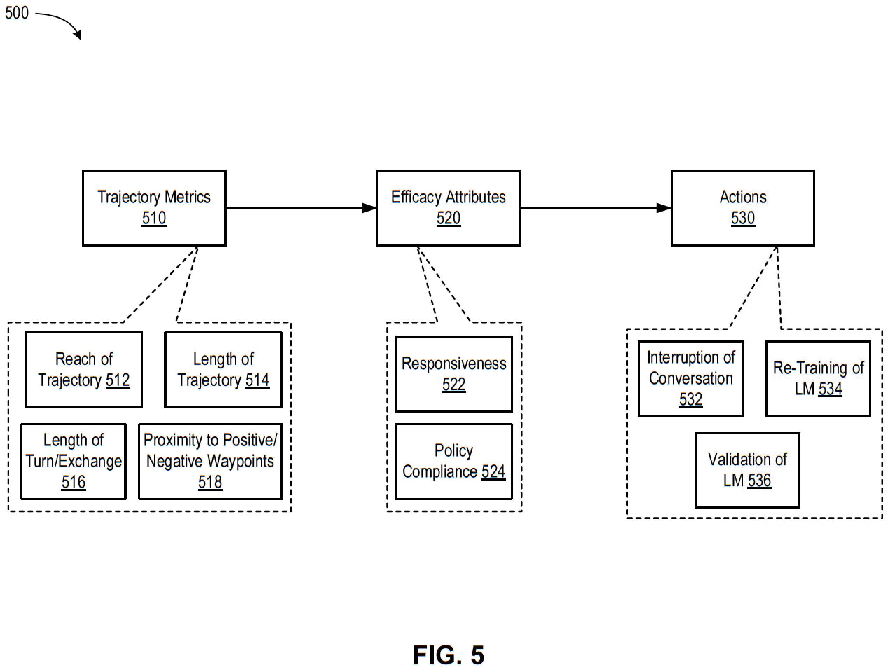

FIG. 5 illustrates an example evaluation pipeline 500 for evaluation of multiexchange user-LM conversations using trajectories in the embedding space, according to at least one embodiment. In some embodiments, trajectory metrics 510 collected by a trajectory analyzer 124 (e.g., with reference to FIGs. 3A-3B) may include the reach (or displacement) of the trajectory 512. In one example, the reach may be defined as the square of the Euclidean distance, *R =* (*V_{N}* - *V*₁)², between the final *V_{N}* and the initial *V*₁ embeddings of a multiexchange conversation. In other embodiments, the reach of the trajectory 512 may be defined as the absolute value of that distance, *R* = |*V_{N}* - *V*₁|. In those embodiments where live monitoring of conversations is performed, the final embedding *V_{N}* may represent the most recent exchange of the conversation, and the embedding trajectory may be extended when one or more exchanges are added to the conversation.

In some embodiments, the metrics may include the length of the trajectory 514, e.g., defined as the sum of displacements of individual exchanges, ${L}_{tot} = {\sum }_{j = 1}^{N} {\left({V}_{j}-{V}_{j - 1}\right)}^{2}$ (or a sum of the absolute values of the individual exchanges ${L}_{tot} = {\sum }_{j = 1}^{N} \left|{V}_{N}-{V}_{1}\right|$).

In some embodiments, a length of a exchange 516 may be defined, e.g., *Lⱼ* = (*Vⱼ* - *V*_{*j*-1})², for various individual (*j*th) exchanges of the conversation. In one example, the length of an exchange may be normalized relative to the length of the embeddings, e.g., ${LN}_{j} = \frac{{\left({V}_{j}-{V}_{j - 1}\right)}^{2}}{\left|{V}_{j}\right| \left|{V}_{j - 1}\right|} ,$ such that embeddings with larger norms |*Vⱼ*| may be more directly compared to embeddings with smaller norms. In some embodiments, the average (normalized) exchange length can be computed for the trajectory, e.g., ${L}_{av} = {N}^{- 1} {\sum }_{j = 1}^{N} {LN}_{j}$.

In some embodiments, the reach of the trajectory 512 can be normalized to the number of exchanges *N, R_{N} =* (*V_{N} - V*₁)²/*N*, or to the length of the trajectory, *R_{L}* = (*V_{N} - V*₁)²/*Lₜₒₜ*.

In some embodiments, a proximity to positive and/or negative waypoints 518 may be defined. For example, a proximity *P_{N}* to negative waypoint(s) may include a Euclidean distance to the closest negative waypoint, to a boundary of regions defined by multiple (e.g., cluster of) negative waypoints. Similarly, a proximity *P_{P}* to positive waypoint(s) may include a Euclidean distance to the closest positive waypoint or to a boundary of regions defined by multiple (e.g., cluster of) positive waypoints, a minimum distance to multiple positive waypoints, and/or the like.

The trajectory metrics 510 may be used to obtain one or more efficacy attributes 520 of the LM's performance. Efficacy attributes 520 may characterize various aspects of LM's performance, including (but not limited to) responsiveness 522 and policy compliance 524. Responsiveness 522 refers to any objective and/or user-expected manifestation or proxy of the quality of the LM's responses, including (but not limited to) relevance of LM's responses, LM's knowledge in the area of user's queries, clarity of LM's responses, completeness of LM's responses, and/or other attribute of the quality of service. Policy compliance 524 refers to acquiescence, from the perspective of the provider of LM's services, of LM's responses to any provider-defined (or legal) policies, e.g., policies that limit a hate content, a harassing content, a profane content, a violent content, a self-harm content, a threat content, a minor-directed content, an illegal weapon content, a controlled substance content, a crime-facilitating content, a personally identifiable content, a misinformation content, a fraud content, a copyright-infringing content, a trademark-infringing content, a plagiarism content, an economic harm content, a biological harm content, an undesired content, a malware content, and/or any other policy-prohibited content.

For example, efficacy attributes 520 associated with responsiveness 522 of a LM may be computed as a weighted sum, $A = α ⋅ {R}_{L} + β ⋅ {L}_{av} ,$ with some weights *α* and *β* that may be set empirically, e.g., based on field testing of a specific LM (and/or specific embedding model). A threshold value *A_{T}* may also be selected empirically in view of metrics *R_{L}* and *Lₐᵥ* that are determined to characterize effective LMs. A high responsiveness attributes *A > A_{T}* may indicate effective LM responses, with individual exchanges of the conversation making substantial progress across the embedding space. Conversely, low responsiveness attributes *A < A_{T}* may indicate ineffective LM responses, with the trajectory meandering randomly across the embedding space. In other embodiments, multiple threshold values, e.g., *A*_{*T*1} and *A*_{*T*2}, may be defined, with high values *A > A*_{*T*1} indicating high LM efficacy, intermediate values *A*_{*T*2} *< A < A*_{*T*1} indicating satisfactory LM efficacy, and low values *A < A*_{*T*2} indicating poor LM efficacy. In some embodiments, one of the weights *α* or *β* may be set to zero. In other embodiments, additional trajectory metrics may be included in the responsiveness attribute *A*, e.g., an inverse value of the Euclidean distance to a positive waypoint or a sum of inverse values of the Euclidean distance to multiple positive waypoints *Dₚ* , e.g., $A = α ⋅ {R}_{L} + β ⋅ {L}_{av} + γ ⋅ {\sum }_{p} \frac{1}{{D}_{p}} .$ Numerous other responsiveness attributes may be defined.

In one example embodiment, a policy compliance attribute may be computed as a ratio, $C = \frac{{R}_{N}}{{\left({V}_{N + 1}-{V}_{N}\right)}^{2}} ,$ of the reach of the trajectory *R_{N} =* (*V_{N} - V*₁)²/*N* (e.g., normalized to the number of *N* exchanges) to the length of the next *N +* 1*th* exchange. In some embodiments, the embeddings used in computing the compliance attribute *C* may be embeddings representing responses of the LM (e.g., uniform refusals to provide prohibited information). The policy compliance attribute may be compared to a threshold value *C_{T},* e.g., *C_{T} =* 0.2, 0.3 or some other value (which may be selected empirically based on field testing). A high compliance attribute, e.g., *C* > *C_{T}*, may indicate that LM's responses against jailbreak attempts are consistent in rejecting user's queries for prohibited information or information that is against one or more policies controlling LM responses, such that the *N +* 1*th* exchange has not elicited a large jump (*V*_{*N*+1} *- V_{N}*)² to a different region of the embedding space (relative to the previous *N* responses). Conversely, a low compliance attribute computed for the *N +* 1*th* exchange, *C* < *C_{T}*, may indicate a successful jailbreak attempt by a user that caused the LM to provide a substantially different response from the earlier refusals, causing a large jump (*V*_{*N*+1} *- V_{N}*)² into a distant region of the embedding space, presumptively corresponding to provisioning of prohibited information to the user. In some embodiments, a compliance attribute may include the Euclidean distance to a negative waypoint or a minimum Euclidean distance to any of multiple negative waypoints *Dₙ* , e.g., $C = min \left\{{D}_{1},{D}_{2},…\right\}$ such that large compliance attribute *C* indicate a strong compliance with policies and small *C* (e.g., less than a predetermined threshold) indicative of a likely policy violation.

Efficacy attributes 520 may be used to perform one or more actions 530. Some actions 530 may be taken live during an ongoing user-LM conversation. Some actions 530 may be taken offline after a user-LM conversation has concluded, e.g., as part of evaluation of LM performance. In one example, e.g., of a live monitoring of a multiexchange conversation, interruption of conversation 532 may be performed based on responsiveness attribute(s) and/or a compliance attribute(s) being lower than the respective thresholds. Interruption of conversation 532 may also include redirecting the user to a different LM or to a human agent, advising the user that the conversation is against the use policy, and/or the like.

As part of offline evaluation, the recorded conversations may be reviewed by a human developer for determination whether the LM's responses lack sufficient knowledge, clarity, and/or relevance. If it is determined that the recorded LM's responses are sub-optimal, e.g., characterized by responsiveness attribute(s) and/or compliance attribute(s) being lower than the respective thresholds, the LM may be directed to retraining 534, which may be associated with improving user interactions and/or the relevant knowledge area, strengthening the LM's guardrail faculties, and/or the like. In some embodiments, such quality-of-service evaluations may be performed in testing of multiple different models or similar models trained using different training datasets. The collected efficacy attributes may then rank models and/or training datasets in the order of efficacy.

In those instances where, as part of offline and/or live evaluation, an LM consistently demonstrates high efficacy attributes (e.g., both responsiveness and policy compliance), the LM action may include validation of LM 536 and continued deployment of the LM for further user interactions (e.g., without retraining).

In some embodiments, trajectory metrics 510 and/or efficacy attributes 520 may be used in training or fine-tuning of LMs after a large number of user-LM conversations is stored for later evaluation. The stored conversations may be clustered in the space of trajectory metrics, e.g., reach-to-length ratio *R_{L}*, the average exchange length *Lₐᵥ,* and/or other trajectory metrics, or in the *AC* space of responsiveness *A* and policy compliance C. A number (e.g., 10%, 15%, etc.) of user-LM conversations associated with each cluster may be reviewed and annotated by a human developer, e.g., with various classifications "effective/ineffective response," "accurate/imprecise response," "clear/unclear response," "compliant/non-compliant response," and/or the like. Other conversations in the same clusters in the space of trajectory metrics are not reviewed by human developers but receive similar annotations as other conversations in the same cluster. The whole set of annotated conversations may then be used for retraining of the LM with annotated examples of responses indicating which responses are to be avoided or, conversely, favored.

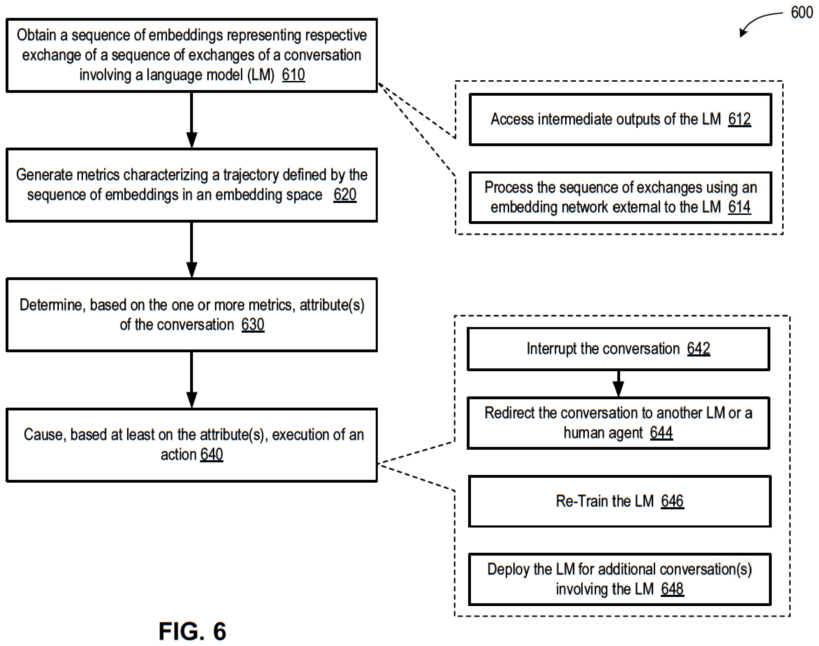

FIG. 6 is a flow diagram of an example method 600 of evaluating efficacy and/or safety of conversations supported by language models using analysis of embedding trajectories, according to at least one embodiment. Method 600 may be performed using one or more processing units (e.g., CPUs, GPUs, accelerators, PPUs, DPUs, etc.), which may include (or communicate with) one or more memory devices. In at least one embodiment, method 600 may be performed using processing units of computing device 102 of FIG. 1 and/or computing device 200 of FIG. 2. In at least one embodiment, processing units performing method 600 may be executing instructions stored on a non-transient computer-readable storage media. In at least one embodiment, method 600 may be performed using multiple processing threads (e.g., CPU threads and/or GPU threads), with individual threads executing one or more individual functions, routines, subroutines, or operations of the methods. In at least one embodiment, processing threads implementing method 600 may be synchronized (e.g., using semaphores, critical sections, and/or other thread synchronization mechanisms). Alternatively, processing threads implementing method 600 may be executed asynchronously with respect to each other. Various operations of method 600 may be performed in a different order compared with the order shown in FIG. 6. Some operations of method 600 may be performed concurrently with other operations. In at least one embodiment, one or more operations shown in FIG. 6 may not always be performed.

In some embodiments, method 600 may be performed to cause an LM service supporting a multiexchange user-LM conversation to halt or continue the conversation based on one or more geometric features of a trajectory that circumscribes, in a multi-dimensional embedding space, a set of embeddings associated with individual exchanges of the conversation. It will be appreciated that the trajectory can include all, or a portion, of the embeddings of the set. In some embodiments the trajectory defines a boundary such that the set of embeddings lie on or within the boundary.

Efficacy and/or safety of LM performance may be evaluated with respect to multiexchange conversations in which user's prompts are produced by entering (e.g., typing) the text of a prompt, uttering the words of the prompt, e.g., as part of any question, request, conversation, dialogue, and/or any other suitable interaction of a human user with an AI system, in one example embodiment. In some embodiments, the multiexchange conversation(s) may be between one user and LM. In some embodiments, the multiexchange conversation(s) may include multiple users and, possibly, more than one LM.

At block 610, method 600 may include obtaining a sequence of embeddings. An individual embedding of the sequence of embeddings may represent a respective exchange (turn) of a sequence of exchanges (turns) of a conversation involving an LM (e.g., prompt embedding 312, response embedding 322, etc., with reference to FIGs. 3A-3B). In some embodiments, the sequence of exchanges represented by the embeddings may include a plurality of conversational entries generated by one side (e.g., participant) of the conversation (such as a user or an LM) or a plurality of conversational entries generated by multiple sides (e.g., participants) of the conversation (e.g., both the user and the LM).

In some embodiments, as illustrated with the top callout portion of FIG. 6, the sequence of embeddings is obtained by accessing (at block 612) intermediate outputs of the LM (e.g., as illustrated in FIG. 3A) or by processing (at block 614) the sequence of exchanges using an embedding network external to the LM (e.g., as illustrated in FIG. 3B).

At block 620, method 600 may include generating one or more metrics (e.g., trajectory metrics 510, with reference to FIG. 5) characterizing a trajectory defined by the sequence of embeddings in an embedding space. In some embodiments, the metrics may include an extent (reach) of the trajectory over the sequence of exchanges of the conversation (e.g., *R =* (*V_{N} - V*₁)², |*V_{N}* - *V*₁|, and/or the like). In some embodiments, the extent of the trajectory may be normalized to a number of exchanges of the sequence of exchanges of the conversation (e.g., *R_{N}*), to a length of the trajectory (e.g., *R_{L}*), and/or the like. In some embodiments, the metrics may further include an average length of the trajectory associated with one exchange of the sequence of exchanges of the conversation (e.g., *Lₐᵥ*).

In some embodiments, the metrics may include proximity of the trajectory to one or more disfavored locations (e.g., negative waypoints, red zones) in the embedding space that are indicative of the conversation being in violation of one or more policies of the LM. In some embodiments, the metrics may include proximity of the trajectory to one or more favored locations (e.g., positive waypoints, green zones) in the embedding space that are indicative of a user satisfaction with performance of the LM.

At block 630, method 600 may include determining, based on the one or more metrics, one or more efficacy attributes of the conversation (e.g., efficacy attributes 520, with reference to FIG. 5). In some embodiments, the one or more efficacy attributes may include a degree of responsiveness to one or more queries directed to the LM and/or degree of compliance of one or more responses of the LM with at least one policy associated with the LM.

At block 640, method 600 can continue with causing, based at least on the one or more efficacy attributes, execution of an action. In some embodiments, the executed action may include one or more options illustrated with the bottom callout portion of FIG. 6. More specifically, as illustrated with block 642, the action may include interrupting the (live) conversation, e.g., responsive to the one or more efficacy attributes indicating a malicious attack on the LM. In some embodiments, interrupting the conversation may be responsive to the one or more efficacy attributes indicating that multiple LM exchanges of the sequence of exchanges of the conversation are unresponsive to one or more queries directed to the LM. In some embodiments, as illustrated with block 644, operations of method 600 may include redirecting the conversation to one or more of another LM or a human agent.

In some embodiments, as illustrated with block 646, operations of method 600 may include retraining the LM, e.g., responsive to the one or more efficacy attributes indicating at least one ineffective response, by the LM, to one or more queries directed to the LM. In some embodiments, as illustrated with block 648, operations of method 600 may include deployment of the LM to carry out one or more additional conversations involving the LM. In some embodiments, causing the LM to be deployed for the one or more additional conversations involving the LM is responsive to the one or more efficacy attributes indicating effective responses, by the LM, to one or more queries directed to the LM.

The systems and methods described herein may be used for a variety of purposes, by way of example and without limitation, for machine (e.g., robot, vehicle, construction machinery, warehouse vehicles/machines, autonomous, semi-autonomous, and/or other machine types) control, machine locomotion, machine driving, synthetic data generation, model training (e.g., using real, augmented, and/or synthetic data, such as synthetic data generated using a simulation platform or system, synthetic data generation techniques such as but not limited to those described herein, etc.), perception, analytics operations, factory operations, generation and/or presentation of augmented reality (AR), virtual reality (VR), mixed reality (MR), etc., robotics operations, medical operations, security and surveillance (e.g., in a smart cities embodiment), autonomous or semi-autonomous machine applications, deep learning, environment simulation, object or actor simulation and/or digital twinning, data center processing, generative AI operations, conversational AI operations, operations involving vision language models, large language models, small language models, multi-modal language models, light transport simulations (e.g., ray-tracing, path tracing, etc.), distributed or collaborative content creation for 3D assets (e.g., using universal scene descriptor (USD) data, such as OpenUSD, and/or other data types), cloud computing, generative artificial intelligence (e.g., using one or more diffusion models, transformer models, etc.), and/or any other suitable applications.

Disclosed embodiments may be comprised in a variety of different systems such as automotive systems (e.g., a control system for an autonomous or semi-autonomous machine, a perception system for an autonomous or semi-autonomous machine), and in-vehicle infotainment system for an autonomous or semi-autonomous machine, systems implemented using a robot or robotic platform, aerial systems, medial systems, boating systems, smart area monitoring systems, systems for performing deep learning operations, systems for performing simulation operations (e.g., in a driving or vehicle simulation, in a robotics simulation, in a smart cities or surveillance simulation, etc.), systems for performing digital twin operations (e.g., in conjunction with a collaborative content creation platform or system, such as, without limitation, NVIDIA's OMNIVERSE and/or another platform, system, or service that uses USD or OpenUSD data types), systems implemented using an edge device, systems incorporating one or more virtual machines (VMs), systems for performing synthetic data generation operations (e.g., using one or more neural rendering fields (NERFs), gaussian splat techniques, diffusion models, transformer models, etc.), systems implemented at least partially in a data center, systems for performing conversational AI operations, systems implementing one or more language models - such as one or more large language models (LLMs), one or more small language models (SLMs), one or more vision language models (VLMs), one or more multi-modal language models, etc., systems for performing light transport simulation, systems for performing collaborative content creation for 3D assets (e.g., using universal scene descriptor (USD) data, such as OpenUSD, computer aided design (CAD) data, 2D and/or 3D graphics or design data, and/or other data types), systems implemented at least partially using cloud computing resources, and/or other types of systems.

In some examples, the machine learning model(s) (e.g., deep neural networks, language models, SLMs, LLMs, VLMs, multi-modal language models, perception models, tracking models, fusion models, transformer models, diffusion models, encoder-only models, decoder-only models, encoder-decoder models, neural rendering field (NERF) models, etc.) described herein may be packaged as a microservice - such an inference microservice (e.g., NVIDIA NIMs) - which may include a container (e.g., an operating system (OS)-level virtualization package) that may include an application programming interface (API) layer, a server layer, a runtime layer, and/or a model "engine." For example, the inference microservice may include the container itself and the model(s) (e.g., weights and biases). In some instances, such as where the machine learning model(s) is small enough (e.g., has a small enough number of parameters), the model(s) may be included within the container itself. In other examples - such as where the model(s) is large - the model(s) may be hosted/stored in the cloud (e.g., in a data center) and/or may be hosted on-premises and/or at the edge (e.g., on a local server or computing device, but outside of the container). In such embodiments, the model(s) may be accessible via one or more APIs - such as REST APIs. As such, and in some embodiments, the machine learning model(s) described herein may be deployed as an inference microservice to accelerate deployment of a model(s) on any cloud, data center, or edge computing system, while ensuring the data is secure. For example, the inference microservice may include one or more APIs, a pre-configured container for simplified deployment, an optimized inference engine (e.g., built using a standardized AI model deployment an execution software, such as NVIDIA's Triton Inference Server, and/or one or more APIs for high performance deep learning inference, which may include an inference runtime and model optimizations that deliver low latency and high throughput for production applications - such as NVIDIA's TensorRT), and/or enterprise management data for telemetry (e.g., including identity, metrics, health checks, and/or monitoring). The machine learning model(s) described herein may be included as part of the microservice along with an accelerated infrastructure with the ability to deploy with a single command and/or orchestrate and auto-scale with a container orchestration system on accelerated infrastructure (e.g., on a single device up to data center scale). As such, the inference microservice may include the machine learning model(s) (e.g., that has been optimized for high performance inference), an inference runtime software to execute the machine learning model(s) and provide outputs/responses to inputs (e.g., user queries, prompts, etc.), and enterprise management software to provide health checks, identity, and/or other monitoring. In some embodiments, the inference microservice may include software to perform in-place replacement and/or updating to the machine learning model(s). When replacing or updating, the software that performs the replacement/updating may maintain user configurations of the inference runtime software and enterprise management software.

In some embodiments, the system and methods described herein may be deployed in a talking or smart kiosk application. For example, a kiosk, tablet, smart display, or other device may include one or more onboard processors (e.g., CPUs, GPUs, deep learning accelerators, SoCs) and memory and/or storage (e.g., for storing the model, the image database, etc.). In some embodiments, the kiosk/tablet/display may communicate (e.g., using one or more network interface cards (NICs) and/or data processing units (DPUs)) with one or more locally hosted servers/computing devices and/or with one or more remotely located servers/computing devices (e.g., in one or more data centers). In such examples, the kiosk may communicate with the machine learning model(s) (e.g., language model, LLM, VLM, MMLM, diffusion model, transformer model, NeRF, DNN, etc.) and/or the image database hosted on the local and/or remote servers using one or more APIs - such as, without limitation, REST APIs.

In one or more embodiments, the system and methods described herein may be deployed in a gaming application. For example, a gaming console, PC, tablet, or other gaming device may include one or more onboard and/or remote processors (e.g., CPUs, GPUs, deep learning accelerators, SoCs) and memory and/or storage (e.g., for storing the game model, game assets, player data, etc.). These devices may use one or more machine learning models (e.g., diffusion models, transformer models, neural rendering field (NeRF) models, language models (e.g., LLMs, SLMs, VLMs, MMLMs, etc.), DNNs, etc.) to enhance gameplay, generate real-time dynamic content, and personalize user experiences based on in-game behavior or pre-stored player profiles. In some embodiments, the system may be deployed in a cloud gaming environment (e.g., NVIDIA's GeFORCE NOW). In such cases, a client device (e.g., a smart display, tablet, or gaming controller) may be used to interact with the game, while the machine learning model(s) and/or visual rendering may occur on one or more remotely located servers/computing devices (e.g., in one or more data centers). The language model, AI processing, and rendering described herein may operate in the cloud, processing player inputs received from an end-user device(s) (e.g., based on controller, keyboard, mouse, joystick, AR/VR/MR/etc. inputs), generating appropriate in-game responses, rendering the content, and sending or transmitting the content to the end-user device(s). During receiving and/or sending the data to and from the end-user or edge device(s), one or more data processing units (DPUs) and/or network interface cards (NICs) may be used.

In some embodiments, the system and methods described herein may be deployed in a video conferencing application. For example, a video conferencing device, such as a dedicated conferencing unit, computer, tablet, and/or smartphone, may include one or more onboard processors (e.g., CPUs, GPUs, deep learning accelerators, SoCs) and memory and/or storage (e.g., for storing the video, audio, or other communication-related data). The system may use the machine learning model(s) (e.g., diffusion models, transformer models, neural rendering field (NeRF) models, language models (e.g., LLMs, SLMs, VLMs, MMLMs, etc.)) to enhance video conferencing functionality, including real-time or near real-time transcription, diarization, language translation, automatic speech recognition (ASR), and/or background noise reduction. In one or more embodiments, the system may enable users to interact with the video conferencing platform using natural language inputs. For example, users may issue voice commands to schedule, join, or leave meetings, or to manage participants and screen sharing. During receiving and/or sending the data to and from the end-user or edge device(s), one or more data processing units (DPUs) and/or network interface cards (NICs) may be used.

In some embodiments, the system and methods described herein may be deployed in a robotics application. For example, a robot or robotic system may include one or more onboard processors (e.g., CPUs, GPUs, hardware-based deep learning accelerators (DLAs), hardware-based programmable vision accelerators (PVAs) - which may include one or more vector processing units (VPUs), direct memory access (DMA) systems, and/or pixel processing engines (PPEs), hardware-based optical flow accelerators (OFAs), SoCs, etc.) and memory and/or storage (e.g., for storing control algorithms, sensor data, and one or more machine learning models). The robotic system may use these processors to execute one or more machine learning models (e.g., language models) that allow it to perform complex tasks autonomously or semi-autonomously, such as interacting with and/or manipulating static and/or dynamic objects, or navigating environments using sensors such as cameras, LiDAR, RADAR, ultrasonic sensors, and more. The system may use sensor fusion techniques to combine data from multiple sensors (e.g., cameras, infrared, LiDAR, RADAR, accelerometers) to create a comprehensive model of the robot's surroundings. This data may be processed locally on the robot or sent to remote servers for more computationally intensive tasks, such as 3D mapping or SLAM (Simultaneous Localization and Mapping). In one or more embodiments, data from individual robots (e.g., sensor data, task status, or environmental conditions) may be uploaded to the cloud, where centralized AI models can analyze and distribute optimized commands to an entire fleet. In some embodiments, the machine learning model(s) (e.g., language models, VLMs, SLMs, LLMs, MMLMs, diffusion models, NeRF models, DNNs, etc.) described herein may be used to allow the robot to perceive and reason about the environment and/or communicate with one or more other robots and/or persons in an environment. In some embodiments, the robot may communicate (e.g., using one or more network interface cards (NICs) and/or data processing units (DPUs)) with one or more locally hosted servers/computing devices and/or with one or more remotely located servers/computing devices (e.g., in one or more data centers).

In some embodiments, the system and methods described herein may be deployed in an in-vehicle infotainment (IVI) system or in-cabin experience (IX) application. For example, the infotainment system within a vehicle (e.g., cars, trucks, drones, construction equipment, robots, semi-autonomous vehicles, or autonomous vehicles) may include one or more onboard processors (e.g., CPUs, GPUs, hardware-based deep learning accelerators (DLAs), hardware-based programmable vision accelerators (PVAs) - which may include one or more vector processing units (VPUs), direct memory access (DMA) systems, and/or pixel processing engines (PPEs), hardware-based optical flow accelerators (OFAs), SoCs, etc.) and memory and/or storage (e.g., for storing control algorithms, sensor data, and one or more machine learning models). and memory and/or storage (e.g., for storing entertainment content, navigation data, and user preferences). The system may use these processors to execute one or more machine learning models (e.g., language models) to enable features such as voice control, personalized media recommendations, dynamic navigation, and real-time communication with other services through network connectivity. The in-vehicle infotainment system may also use natural language processing (NLP) models to enable voice-based interaction. The one or more machine learning models may be stored locally or accessed through one or more APIs that connect to cloud services, enabling the system to process requests in real time or near real-time.

In some embodiments, one or more transformer engines (TEs) may be implemented. The transformer engine may use micro-tensor scaling to optimize performance and accuracy - such as to enable 16-bit floating point (FP16), 8-bit floting point (FP8), and/or 4-bit floating point (FP4) artificial intelligence processing. For example, the transformer engine may use 16-bit or 8-bit floating point precision and an 8-bit or 4-bit floating point data format combined with software algorithms for increasing AI performance and capabilities. By reducing math operations to 8-bits or 4-bits, the TE allows for training larger networks faster without compromising accuracy. For example, the TEs may include a library for accelerating transformer models on processing devices - such as GPUs - to provide better performance with lower memory utilization in both training and inference. When the TE is combined with other technologies, such as high-speed interconnects between nodes (e.g., using switches - such as NVLink Switches) and tensor cores (which enable mixed-precision computing, such as microscaling precision support), server clusters may be more capable of training enormous networks (e.g., billions of parameters) at high speeds. As such, tensor core precisions of FP64, TF32, BF16, FP16, FP8, INT8, FP6, and FP4 may be supported, as well as CUDA core precisions of FP64, FP32, FP16, and BF16.

Although examples may be described herein with respect to using machine learning models, such as neural networks or language models, this is not intended to be limiting. For example, and without limitation, any of the various machine learning models and/or neural networks described herein may include any type of machine learning model, such as a machine learning model(s) using linear regression, logistic regression, decision trees, support vector machines (SVM), Naive Bayes, k-nearest neighbor (Knn), K means clustering, random forest, dimensionality reduction algorithms, gradient boosting algorithms, neural networks (e.g., auto-encoder neural networks, artificial neural networks (ANNs), convolutional neural networks (CNNs), recurrent neural networks (RNNs), perceptrons, Long/Short Term Memory (LSTM) networks, multi-layer perceptron (MLP) networks, deep stacking networks (DSNs), generative pre-training (GPT) models or networks, feed forward networks, radial basis function ANNs, self-organizing maps (SOMs), Kohonen maps, Hopfield networks, Boltzmann machine, deep belief neural networks, deconvolutional neural networks, generative adversarial networks (GANs), liquid state machines, modular neural networks, liquid state machines, sequence-to-sequence models, networks using transformer architectures, state space models (SSMs) (e.g., networks using Mamba architectures (e.g., Mamba-1, Mamba 2, etc.), networks using selective state space models, networks using structured state space sequence models, etc.), diffusion models (e.g., diffusion probabilistic models, score-based generative models, etc.), neural radiance field (NeRF) models, Gaussian splat models, Kolmogorov-Arnold networks (KANs), models with encoder-only architectures, models with decoder-only architectures, models with encoder-decoder architectures, generative machine learning models, language models, large language models (LLMs), vision language models (VLMs), multi-modal language models (MMLMs), large action models (LAMs), vision-language-action (VLA) models, etc.), and/or other types of machine learning models.

### INFERENCE AND TRAINING LOGIC

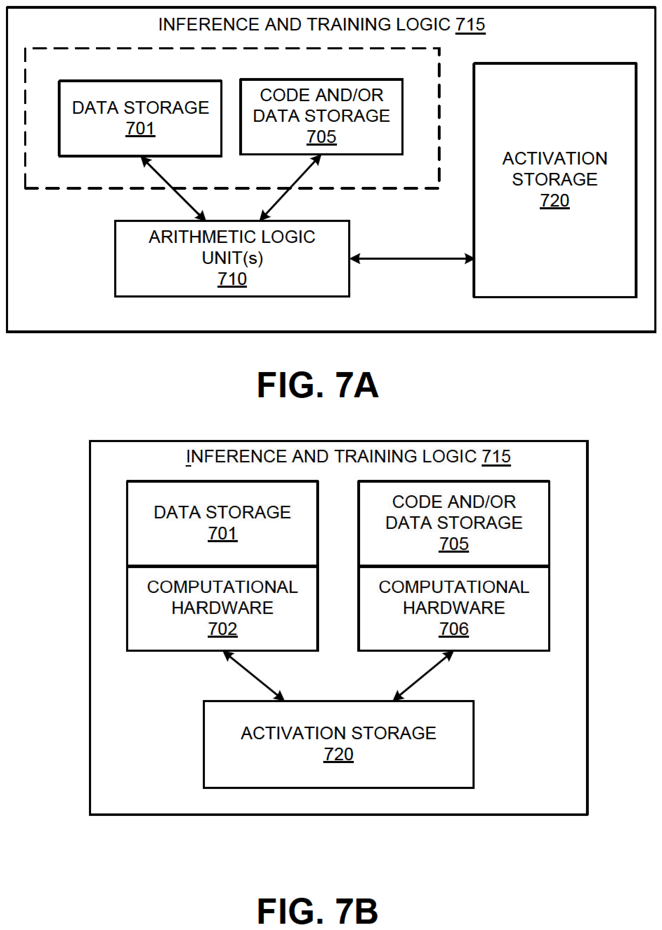

FIG. 7A illustrates inference and/or training logic 715 used to perform inferencing and/or training operations associated with one or more embodiments.

In at least one embodiment, inference and/or training logic 715 may include, without limitation, code and/or data storage 701 to store forward and/or output weight and/or input/output data, and/or other parameters to configure neurons or layers of a neural network trained and/or used for inferencing in aspects of one or more embodiments. In at least one embodiment, training logic 715 may include, or be coupled to code and/or data storage 701 to store graph code or other software to control timing and/or order, in which weight and/or other parameter information is to be loaded to configure, logic, including integer and/or floating-point units (collectively, arithmetic logic units (ALUs) or simply circuits). In at least one embodiment, code, such as graph code, loads weight or other parameter information into processor ALUs based on an architecture of a neural network to which such code corresponds. In at least one embodiment, code and/or data storage 701 stores weight parameters and/or input/output data of each layer of a neural network trained or used in conjunction with one or more embodiments during forward propagation of input/output data and/or weight parameters during training and/or inferencing using aspects of one or more embodiments. In at least one embodiment, any portion of code and/or data storage 701 may be included with other on-chip or off-chip data storage, including a processor's L1, L2, or L3 cache or system memory.

In at least one embodiment, any portion of code and/or data storage 701 may be internal or external to one or more processors or other hardware logic devices or circuits. In at least one embodiment, code and/or code and/or data storage 701 may be cache memory, dynamic randomly addressable memory ("DRAM"), static randomly addressable memory ("SRAM"), non-volatile memory (e.g., flash memory), or other storage. In at least one embodiment, a choice of whether code and/or code and/or data storage 701 is internal or external to a processor, for example, or comprising DRAM, SRAM, flash or some other storage type may depend on available storage on-chip versus off-chip, latency requirements of training and/or inferencing functions being performed, batch size of data used in inferencing and/or training of a neural network, or some combination of these factors.

In at least one embodiment, inference and/or training logic 715 may include, without limitation, a code and/or data storage 705 to store backward and/or output weight and/or input/output data corresponding to neurons or layers of a neural network trained and/or used for inferencing in aspects of one or more embodiments. In at least one embodiment, code and/or data storage 705 stores weight parameters and/or input/output data of each layer of a neural network trained or used in conjunction with one or more embodiments during backward propagation of input/output data and/or weight parameters during training and/or inferencing using aspects of one or more embodiments. In at least one embodiment, training logic 715 may include, or be coupled to code and/or data storage 705 to store graph code or other software to control timing and/or order, in which weight and/or other parameter information is to be loaded to configure, logic, including integer and/or floating point units (collectively, arithmetic logic units (ALUs).

In at least one embodiment, code, such as graph code, causes the loading of weight or other parameter information into processor ALUs based on an architecture of a neural network to which such code corresponds. In at least one embodiment, any portion of code and/or data storage 705 may be included with other on-chip or off-chip data storage, including a processor's L1, L2, or L3 cache or system memory. In at least one embodiment, any portion of code and/or data storage 705 may be internal or external to one or more processors or other hardware logic devices or circuits. In at least one embodiment, code and/or data storage 705 may be cache memory, DRAM, SRAM, non-volatile memory (e.g., flash memory), or other storage. In at least one embodiment, a choice of whether code and/or data storage 705 is internal or external to a processor, for example, or comprising DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, code and/or data storage 701 and code and/or data storage 705 may be separate storage structures. In at least one embodiment, code and/or data storage 701 and code and/or data storage 705 may be a combined storage structure. In at least one embodiment, code and/or data storage 701 and code and/or data storage 705 may be partially combined and partially separate. In at least one embodiment, any portion of code and/or data storage 701 and code and/or data storage 705 may be included with other on-chip or off-chip data storage, including a processor's L1, L2, or L3 cache or system memory.

In at least one embodiment, inference and/or training logic 715 may include, without limitation, one or more arithmetic logic unit(s) ("ALU(s)") 710,including integer and/or floating point units, to perform logical and/or mathematical operations based, at least in part on, or indicated by, training and/or inference code (e.g., graph code), a result of which may produce activations (e.g., output values from layers or neurons within a neural network) stored in an activation storage 720 that are functions of input/output and/or weight parameter data stored in code and/or data storage 701 and/or code and/or data storage 705. In at least one embodiment, activations stored in activation storage 720 are generated according to linear algebraic and or matrix-based mathematics performed by ALU(s) 710 in response to performing instructions or other code, wherein weight values stored in code and/or data storage 705 and/or data storage 701 are used as operands along with other values, such as bias values, gradient information, momentum values, or other parameters or hyperparameters, any or all of which may be stored in code and/or data storage 705 or code and/or data storage 701 or another storage on or off-chip.

In at least one embodiment, ALU(s) 710 are included within one or more processors or other hardware logic devices or circuits, whereas in another embodiment, ALU(s) 710 may be external to a processor or other hardware logic device or circuit that uses them (e.g., a coprocessor). In at least one embodiment, ALU(s) 710 may be included within a processor's execution units or otherwise within a bank of ALUs accessible by a processor's execution units either within same processor or distributed between different processors of different types (e.g., central processing units, graphics processing units, fixed function units, etc.). In at least one embodiment, code and/or data storage 701, code and/or data storage 705, and activation storage 720 may share a processor or other hardware logic device or circuit, whereas in another embodiment, they may be in different processors or other hardware logic devices or circuits, or some combination of same and different processors or other hardware logic devices or circuits. In at least one embodiment, any portion of activation storage 720 may be included with other on-chip or off-chip data storage, including a processor's L1, L2, or L3 cache or system memory. Furthermore, inferencing and/or training code may be stored with other code accessible to a processor or other hardware logic or circuit and fetched and/or processed using a processor's fetch, decode, scheduling, execution, retirement and/or other logical circuits.

In at least one embodiment, activation storage 720 may be cache memory, DRAM, SRAM, non-volatile memory (e.g., flash memory), or other storage. In at least one embodiment, activation storage 720 may be completely or partially within or external to one or more processors or other logical circuits. In at least one embodiment, a choice of whether activation storage 720 is internal or external to a processor, for example, or comprising DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, inference and/or training logic 715 illustrated in FIG. 7A may be used in conjunction with an application-specific integrated circuit ("ASIC"), such as a TensorFlow^{®} Processing Unit from Google, an inference processing unit (IPU) from Graphcore^{™}, or a Nervana^{®} (e.g., "Lake Crest") processor from Intel Corp. In at least one embodiment, inference and/or training logic 715 illustrated in FIG. 7A may be used in conjunction with central processing unit ("CPU") hardware, graphics processing unit ("GPU") hardware or other hardware, such as field programmable gate arrays ("FPGAs").

FIG. 7B illustrates inference and/or training logic 715, according to at least one embodiment. In at least one embodiment, inference and/or training logic 715 may include, without limitation, hardware logic in which computational resources are dedicated or otherwise exclusively used in conjunction with weight values or other information corresponding to one or more layers of neurons within a neural network. In at least one embodiment, inference and/or training logic 715 illustrated in FIG. 7B may be used in conjunction with an application-specific integrated circuit (ASIC), such as TensorFlow^{®} Processing Unit from Google, an inference processing unit (IPU) from Graphcore^{™}, or a Nervana^{®} (e.g., "Lake Crest") processor from Intel Corp. In at least one embodiment, inference and/or training logic 715 illustrated in FIG. 7B may be used in conjunction with central processing unit (CPU) hardware, graphics processing unit (GPU) hardware or other hardware, such as field programmable gate arrays (FPGAs). In at least one embodiment, inference and/or training logic 715 includes, without limitation, code and/or data storage 701 and code and/or data storage 705, which may be used to store code (e.g., graph code), weight values and/or other information, including bias values, gradient information, momentum values, and/or other parameter or hyperparameter information. In at least one embodiment illustrated in FIG. 7B, each of code and/or data storage 701 and code and/or data storage 705 is associated with a dedicated computational resource, such as computational hardware 702 and computational hardware 706, respectively. In at least one embodiment, each of computational hardware 702 and computational hardware 706 comprises one or more ALUs that perform mathematical functions, such as linear algebraic functions, only on information stored in code and/or data storage 701 and code and/or data storage 705, respectively, result of which is stored in activation storage 720.

In at least one embodiment, each of code and/or data storage 701 and 705 and corresponding computational hardware 702 and 706, respectively, correspond to different layers of a neural network, such that resulting activation from one storage/computational pair 701/702 of code and/or data storage 701 and computational hardware 702 is provided as an input to a next storage/computational pair 705/706 of code and/or data storage 705 and computational hardware 706, in order to mirror a conceptual organization of a neural network. In at least one embodiment, each of storage/computational pairs 701/702 and 705/706 may correspond to more than one neural network layer. In at least one embodiment, additional storage/computation pairs (not shown) subsequent to or in parallel with storage/computation pairs 701/702 and 705/706 may be included in inference and/or training logic 715.

### NEURAL NETWORK TRAINING AND DEPLOYMENT

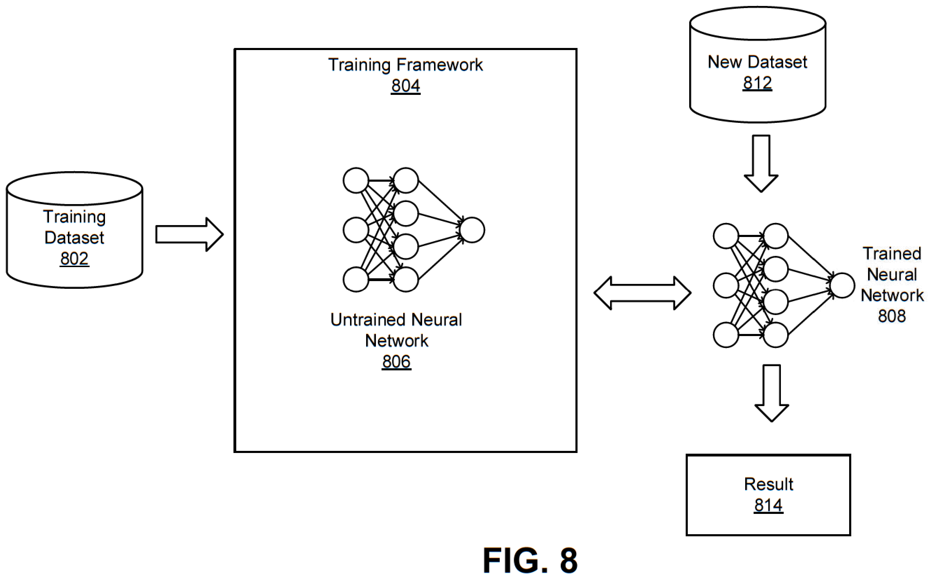

FIG. 8 illustrates training and deployment of a deep neural network, according to at least one embodiment. In at least one embodiment, untrained neural network 806 is trained using a training dataset 802. In at least one embodiment, training framework 804 is a PyTorch framework, whereas in other embodiments, training framework 804 is a TensorFlow, Boost, Caffe, Microsoft Cognitive Toolkit/CNTK, MXNet, Chainer, Keras, Deeplearning4j, or other training framework. In at least one embodiment, training framework 804 trains an untrained neural network 806 and enables it to be trained using processing resources described herein to generate a trained neural network 808. In at least one embodiment, weights may be chosen randomly or by pre-training using a deep belief network. In at least one embodiment, training may be performed in either a supervised, partially supervised, or unsupervised manner.

In at least one embodiment, untrained neural network 806 is trained using supervised learning, wherein training dataset 802 includes an input paired with a desired output for an input, or where training dataset 802 includes input having a known output and an output of neural network 806 is manually graded. In at least one embodiment, untrained neural network 806 is trained in a supervised manner and processes inputs from training dataset 802 and compares resulting outputs against a set of expected or desired outputs. In at least one embodiment, errors are then propagated back through untrained neural network 806. In at least one embodiment, training framework 804 adjusts weights that control untrained neural network 806. In at least one embodiment, training framework 804 includes tools to monitor how well untrained neural network 806 is converging towards a model, such as trained neural network 808, suitable to generating correct answers, such as in result 814, based on input data such as a new dataset 812. In at least one embodiment, training framework 804 trains untrained neural network 806 repeatedly while adjusting weights to refine an output of untrained neural network 806 using a loss function and adjustment algorithm, such as stochastic gradient descent. In at least one embodiment, training framework 804 trains untrained neural network 806 until untrained neural network 806 achieves a desired accuracy. In at least one embodiment, trained neural network 808 can then be deployed to implement any number of machine learning operations.

In at least one embodiment, untrained neural network 806 is trained using unsupervised learning, whereas untrained neural network 806 attempts to train itself using unlabeled data. In at least one embodiment, unsupervised learning training dataset 802 will include input data without any associated output data or "ground truth" data. In at least one embodiment, untrained neural network 806 can learn groupings within training dataset 802 and can determine how individual inputs are related to untrained dataset 802. In at least one embodiment, unsupervised training can be used to generate a self-organizing map in trained neural network 808 capable of performing operations useful in reducing dimensionality of new dataset 812. In at least one embodiment, unsupervised training can also be used to perform anomaly detection, which allows identification of data points in new dataset 812 that deviate from normal patterns of new dataset 812.

In at least one embodiment, semi-supervised learning may be used, which is a technique in which in training dataset 802 includes a mix of labeled and unlabeled data. In at least one embodiment, training framework 804 may be used to perform incremental learning, such as through transferred learning techniques. In at least one embodiment, incremental learning enables trained neural network 808 to adapt to new dataset 812 without forgetting knowledge instilled within trained neural network 808 during initial training.

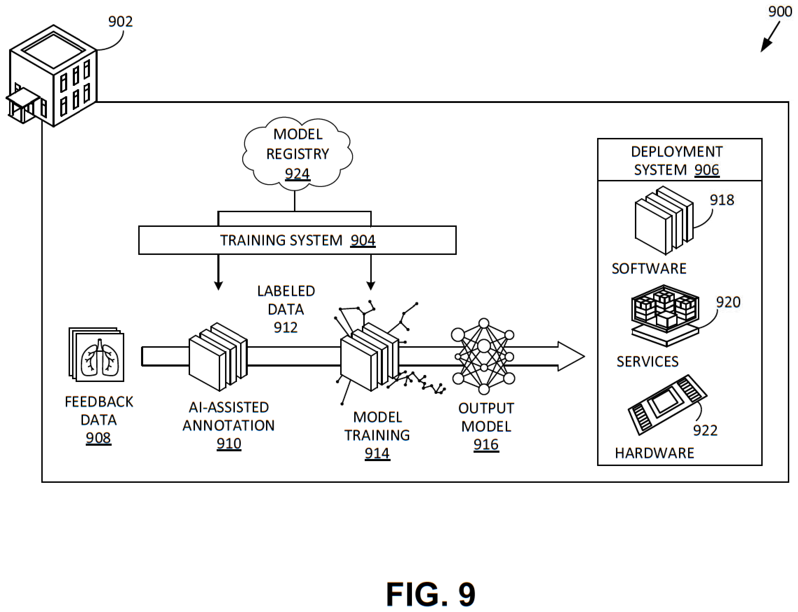

With reference to FIG. 9, FIG. 9 is an example data flow diagram for a process 900 of generating and deploying a processing and inferencing pipeline, according to at least one embodiment.. In at least one embodiment, process 900 may be deployed to perform game name recognition analysis and inferencing on user feedback data at one or more facilities 902, such as a data center.

In at least one embodiment, process 900 may be executed within a training system 904 and/or a deployment system 906. In at least one embodiment, training system 904 may be used to perform training, deployment, and embodiment of machine learning models (e.g., neural networks, object detection algorithms, computer vision algorithms, etc.) for use in deployment system 906. In at least one embodiment, deployment system 906 may be configured to offload processing and compute resources among a distributed computing environment to reduce infrastructure requirements at facility 902. In at least one embodiment, deployment system 906 may provide a streamlined platform for selecting, customizing, and implementing virtual instruments for use with computing devices at facility 902. In at least one embodiment, virtual instruments may include software-defined applications for performing one or more processing operations with respect to feedback data. In at least one embodiment, one or more applications in a pipeline may use or call upon services (e.g., inference, visualization, compute, AI, etc.) of deployment system 906 during execution of applications.

In at least one embodiment, some applications used in advanced processing and inferencing pipelines may use machine learning models or other AI to perform one or more processing steps. In at least one embodiment, machine learning models may be trained at facility 902 using feedback data 908 (such as imaging data) stored at facility 902 or feedback data 908 from another facility or facilities, or a combination thereof. In at least one embodiment, training system 904 may be used to provide applications, services, and/or other resources for generating working, deployable machine learning models for deployment system 906.

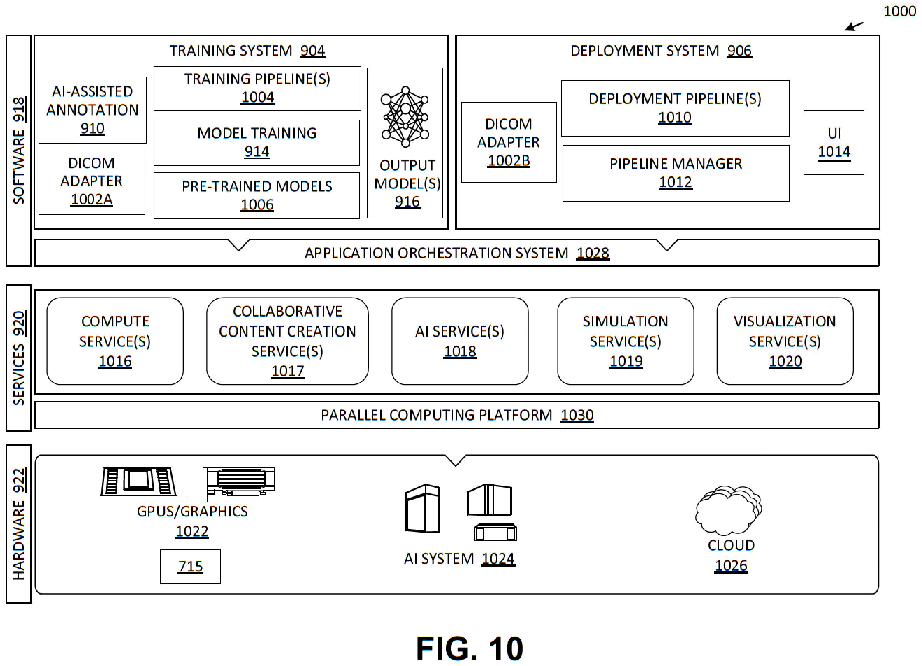

In at least one embodiment, a model registry 924 may be backed by object storage that may support versioning and object metadata. In at least one embodiment, object storage may be accessible through, for example, a cloud storage (e.g., a cloud 1026 of FIG. 10) compatible application programming interface (API) from within a cloud platform. In at least one embodiment, machine learning models within model registry 924 may be uploaded, listed, modified, or deleted by developers or partners of a system interacting with an API. In at least one embodiment, an API may provide access to methods that allow users with appropriate credentials to associate models with applications, such that models may be executed as part of execution of containerized instantiations of applications.

In at least one embodiment, a training pipeline 1004 (FIG. 10) may include a scenario where facility 902 is training their own machine learning model, or has an existing machine learning model that needs to be optimized or updated. In at least one embodiment, feedback data 908 may be received from various channels, such as forums, web forms, or the like. In at least one embodiment, once feedback data 908 is received, AI-assisted annotation 910 may be used to aid in generating annotations corresponding to feedback data 908 to be used as ground truth data for a machine learning model. In at least one embodiment, AI-assisted annotation 910 may include one or more machine learning models (e.g., convolutional neural networks (CNNs)) that may be trained to generate annotations corresponding to certain types of feedback data 908 (e.g., from certain devices) and/or certain types of anomalies in feedback data 908. In at least one embodiment, AI-assisted annotations 910 may then be used directly, or may be adjusted or fine-tuned using an annotation tool, to generate ground truth data. In at least one embodiment, in some examples, labeled data 912 may be used as ground truth data for training a machine learning model. In at least one embodiment, AI-assisted annotations 910, labeled data 912, or a combination thereof may be used as ground truth data for training a machine learning model, e.g., via model training 914 in FIGs. 9-10. In at least one embodiment, a trained machine learning model may be referred to as an output model 916, and may be used by deployment system 906, as described herein.

In at least one embodiment, training pipeline 1004 (FIG. 10) may include a scenario where facility 902 needs a machine learning model for use in performing one or more processing tasks for one or more applications in deployment system 906, but facility 902 may not currently have such a machine learning model (or may not have a model that is optimized, efficient, or effective for such purposes). In at least one embodiment, an existing machine learning model may be selected from model registry 924. In at least one embodiment, model registry 924 may include machine learning models trained to perform a variety of different inference tasks on imaging data. In at least one embodiment, machine learning models in model registry 924 may have been trained on imaging data from different facilities than facility 902 (e.g., facilities that are remotely located). In at least one embodiment, machine learning models may have been trained on imaging data from one location, two locations, or any number of locations. In at least one embodiment, when being trained on imaging data, which may be a form of feedback data 908, from a specific location, training may take place at that location, or at least in a manner that protects confidentiality of imaging data or restricts imaging data from being transferred off-premises (e.g., to comply with HIPAA regulations, privacy regulations, etc.). In at least one embodiment, once a model is trained - or partially trained - at one location, a machine learning model may be added to model registry 924. In at least one embodiment, a machine learning model may then be retrained, or updated, at any number of other facilities, and a retrained or updated model may be made available in model registry 924. In at least one embodiment, a machine learning model may then be selected from model registry 924 - and referred to as output model 916 - and may be used in deployment system 906 to perform one or more processing tasks for one or more applications of a deployment system.

In at least one embodiment, training pipeline 1004 (FIG. 10) may be used in a scenario that includes facility 902 requiring a machine learning model for use in performing one or more processing tasks for one or more applications in deployment system 906, but facility 902 may not currently have such a machine learning model (or may not have a model that is optimized, efficient, or effective for such purposes). In at least one embodiment, a machine learning model selected from model registry 924 might not be fine-tuned or optimized for feedback data 908 generated at facility 902 because of differences in populations, genetic variations, robustness of training data used to train a machine learning model, diversity in anomalies of training data, and/or other issues with training data. In at least one embodiment, AI-assisted annotation 910 may be used to aid in generating annotations corresponding to feedback data 908 to be used as ground truth data for retraining or updating a machine learning model. In at least one embodiment, labeled data 912 may be used as ground truth data for training a machine learning model. In at least one embodiment, retraining or updating a machine learning model may be referred to as model training 914. In at least one embodiment, model training 914 - e.g., AI-assisted annotations 910, labeled data 912, or a combination thereof - may be used as ground truth data for retraining or updating a machine learning model.

In at least one embodiment, deployment system 906 may include software 918, services 920, hardware 922, and/or other components, features, and functionality. In at least one embodiment, deployment system 906 may include a software "stack," such that software 918 may be built on top of services 920 and may use services 920 to perform some or all of processing tasks, and services 920 and software 918 may be built on top of hardware 922 and use hardware 922 to execute processing, storage, and/or other compute tasks of deployment system 906.

In at least one embodiment, software 918 may include any number of different containers, where each container may execute an instantiation of an application. In at least one embodiment, each application may perform one or more processing tasks in an advanced processing and inferencing pipeline (e.g., inferencing, object detection, feature detection, segmentation, image enhancement, calibration, etc.). In at least one embodiment, for each type of computing device there may be any number of containers that may perform a data processing task with respect to feedback data 908 (or other data types, such as those described herein). In at least one embodiment, an advanced processing and inferencing pipeline may be defined based on selections of different containers that are desired or required for processing feedback data 908, in addition to containers that receive and configure imaging data for use by each container and/or for use by facility 902 after processing through a pipeline (e.g., to convert outputs back to a usable data type for storage and display at facility 902). In at least one embodiment, a combination of containers within software 918 (e.g., that make up a pipeline) may be referred to as a virtual instrument (as described in more detail herein), and a virtual instrument may leverage services 920 and hardware 922 to execute some or all processing tasks of applications instantiated in containers.

In at least one embodiment, data may undergo pre-processing as part of data processing pipeline to prepare data for processing by one or more applications. In at least one embodiment, post-processing may be performed on an output of one or more inferencing tasks or other processing tasks of a pipeline to prepare an output data for a next application and/or to prepare output data for transmission and/or use by a user (e.g., as a response to an inference request). In at least one embodiment, inferencing tasks may be performed by one or more machine learning models, such as trained or deployed neural networks, which may include output models 916 of training system 904.

In at least one embodiment, tasks of data processing pipeline may be encapsulated in one or more container(s) that each represent a discrete, fully functional instantiation of an application and virtualized computing environment that is able to reference machine learning models. In at least one embodiment, containers or applications may be published into a private (e.g., limited access) area of a container registry (described in more detail herein), and trained or deployed models may be stored in model registry 924 and associated with one or more applications. In at least one embodiment, images of applications (e.g., container images) may be available in a container registry, and once selected by a user from a container registry for deployment in a pipeline, an image may be used to generate a container for an instantiation of an application for use by a user system.

In at least one embodiment, developers may develop, publish, and store applications (e.g., as containers) for performing processing and/or inferencing on supplied data. In at least one embodiment, development, publishing, and/or storing may be performed using a software development kit (SDK) associated with a system (e.g., to ensure that an application and/or container developed is compliant with or compatible with a system). In at least one embodiment, an application that is developed may be tested locally (e.g., at a first facility, on data from a first facility) with an SDK which may support at least some of services 920 as a system (e.g., architecture 1000 of FIG. 10). In at least one embodiment, once validated by architecture 1000 (e.g., for accuracy, etc.), an application may be available in a container registry for selection and/or embodiment by a user (e.g., a hospital, clinic, lab, healthcare provider, etc.) to perform one or more processing tasks with respect to data at a facility (e.g., a second facility) of a user.

In at least one embodiment, developers may then share applications or containers through a network for access and use by users of a system (e.g., architecture 1000 of FIG. 10). In at least one embodiment, completed and validated applications or containers may be stored in a container registry and associated machine learning models may be stored in model registry 924. In at least one embodiment, a requesting entity that provides an inference or image processing request may browse a container registry and/or model registry 924 for an application, container, dataset, machine learning model, etc., select a desired combination of elements for inclusion in data processing pipeline, and submit a processing request. In at least one embodiment, a request may include input data that is necessary to perform a request, and/or may include a selection of application(s) and/or machine learning models to be executed in processing a request. In at least one embodiment, a request may then be passed to one or more components of deployment system 906 (e.g., a cloud) to perform processing of a data processing pipeline. In at least one embodiment, processing by deployment system 906 may include referencing selected elements (e.g., applications, containers, models, etc.) from a container registry and/or model registry 924. In at least one embodiment, once results are generated by a pipeline, results may be returned to a user for reference (e.g., for viewing in a viewing application suite executing on a local, on-premises workstation or terminal).

In at least one embodiment, to aid in processing or execution of applications or containers in pipelines, services 920 may be leveraged. In at least one embodiment, services 920 may include compute services, collaborative content creation services, simulation services, artificial intelligence (AI) services, visualization services, and/or other service types. In at least one embodiment, services 920 may provide functionality that is common to one or more applications in software 918, so functionality may be abstracted to a service that may be called upon or leveraged by applications. In at least one embodiment, functionality provided by services 920 may run dynamically and more efficiently, while also scaling well by allowing applications to process data in parallel, e.g., using a parallel computing platform 1030 (FIG. 10). In at least one embodiment, rather than each application that shares a same functionality offered by a service 920 being required to have a respective instance of service 920, service 920 may be shared between and among various applications. In at least one embodiment, services may include an inference server or engine that may be used for executing detection or segmentation tasks, as non-limiting examples. In at least one embodiment, a model training service may be included that may provide machine learning model training and/or retraining capabilities.

In at least one embodiment, where a service 920 includes an AI service (e.g., an inference service), one or more machine learning models associated with an application for anomaly detection (e.g., tumors, growth abnormalities, scarring, etc.) may be executed by calling upon (e.g., as an API call) an inference service (e.g., an inference server) to execute machine learning model(s), or processing thereof, as part of application execution. In at least one embodiment, where another application includes one or more machine learning models for segmentation tasks, an application may call upon an inference service to execute machine learning models for performing one or more of processing operations associated with segmentation tasks. In at least one embodiment, software 918 implementing advanced processing and inferencing pipeline may be streamlined because each application may call upon the same inference service to perform one or more inferencing tasks.

In at least one embodiment, hardware 922 may include GPUs, CPUs, graphics cards, an AI/deep learning system (e.g., an AI supercomputer, such as NVIDIA's DGX^{™} supercomputer system), a cloud platform, or a combination thereof. In at least one embodiment, different types of hardware 922 may be used to provide efficient, purpose-built support for software 918 and services 920 in deployment system 906. In at least one embodiment, use of GPU processing may be implemented for processing locally (e.g., at facility 902), within an AI/deep learning system, in a cloud system, and/or in other processing components of deployment system 906 to improve efficiency, accuracy, and efficacy of game name recognition.

In at least one embodiment, software 918 and/or services 920 may be optimized for GPU processing with respect to deep learning, machine learning, and/or high-performance computing, simulation, and visual computing, as non-limiting examples. In at least one embodiment, at least some of the computing environment of deployment system 906 and/or training system 904 may be executed in a datacenter or one or more supercomputers or high performance computing systems, with GPU-optimized software (e.g., hardware and software combination of NVIDIA's DGX^{™} system). In at least one embodiment, hardware 922 may include any number of GPUs that may be called upon to perform processing of data in parallel, as described herein. In at least one embodiment, cloud platform may further include GPU processing for GPU-optimized execution of deep learning tasks, machine learning tasks, or other computing tasks. In at least one embodiment, cloud platform (e.g., NVIDIA's NGC^{™}) may be executed using an AI/deep learning supercomputer(s) and/or GPU-optimized software (e.g., as provided on NVIDIA's DGX^{™} systems) as a hardware abstraction and scaling platform. In at least one embodiment, cloud platform may integrate an application container clustering system or orchestration system (e.g., KUBERNETES) on multiple GPUs to enable seamless scaling and load balancing.

FIG. 10 is a system diagram for an example architecture 1000 for generating and deploying a deployment pipeline, according to at least one embodiment. In at least one embodiment, architecture 1000 may be used to implement process 900 of FIG. 9 and/or other processes including advanced processing and inferencing pipelines. In at least one embodiment, architecture 1000 may include training system 904 and deployment system 906. In at least one embodiment, training system 904 and deployment system 906 may be implemented using software 918, services 920, and/or hardware 922, as described herein.

In at least one embodiment, architecture 1000 (e.g., training system 904 and/or deployment system 906) may implemented in a cloud computing environment (e.g., using cloud 1026). In at least one embodiment, architecture 1000 may be implemented locally with respect to a facility, or as a combination of both cloud and local computing resources.. In at least one embodiment, access to APIs in cloud 1026 may be restricted to authorized users through enacted security measures or protocols. In at least one embodiment, a security protocol may include web tokens that may be signed by an authentication (e.g., AuthN, AuthZ, Gluecon, etc.) service and may carry appropriate authorization. In at least one embodiment, APIs of virtual instruments (described herein), or other instantiations of architecture 1000, may be restricted to a set of public internet service providers (ISPs) that have been vetted or authorized for interaction.

In at least one embodiment, various components of architecture 1000 may communicate between and among one another using any of a variety of different network types, including but not limited to local area networks (LANs) and/or wide area networks (WANs) via wired and/or wireless communication protocols. In at least one embodiment, communication between facilities and components of architecture 1000 (e.g., for transmitting inference requests, for receiving results of inference requests, etc.) may be communicated over a data bus or data busses, wireless data protocols (Wi-Fi), wired data protocols (e.g., Ethernet), etc.

In at least one embodiment, training system 904 may execute training pipelines 1004, similar to those described herein with respect to FIG. 9. In at least one embodiment, where one or more machine learning models are to be used in deployment pipelines 1010 by deployment system 906, training pipelines 1004 may be used to train or retrain one or more (e.g., pre-trained) models, and/or implement one or more of pre-trained models 1006 (e.g., without a need for retraining or updating). In at least one embodiment, as a result of training pipelines 1004, output model(s) 916 may be generated. In at least one embodiment, training pipelines 1004 may include any number of processing steps, AI-assisted annotation 910, labeling or annotating of feedback data 908 to generate labeled data 912, model selection from a model registry, model training 914, training, retraining, or updating models, and/or other processing steps. In at least one embodiment, for different machine learning models used by deployment system 906, different training pipelines 1004 may be used. In at least one embodiment, training pipeline 1004, similar to a first example described with respect to FIG. 9, may be used for a first machine learning model, training pipeline 1004, similar to a second example described with respect to FIG. 9, may be used for a second machine learning model, and training pipeline 1004, similar to a third example described with respect to FIG. 9, may be used for a third machine learning model. In at least one embodiment, any combination of tasks within training system 904 may be used depending on what is required for each respective machine learning model. In at least one embodiment, one or more of machine learning models may already be trained and ready for deployment so machine learning models may not undergo any processing by training system 904, and may be implemented by deployment system 906.

In at least one embodiment, output model(s) 916 and/or pre-trained model(s) 1006 may include any types of machine learning models depending on embodiment. In at least one embodiment, and without limitation, machine learning models used by architecture 1000 may include machine learning model(s) using linear regression, logistic regression, decision trees, support vector machines (SVM), Naive Bayes, k-nearest neighbor (Knn), K means clustering, random forest, dimensionality reduction algorithms, gradient boosting algorithms, neural networks (e.g., auto-encoders, convolutional, recurrent, perceptrons, Long/Short Term Memory (LSTM), Bi-LSTM, Hopfield, Boltzmann, deep belief, deconvolutional, generative adversarial, liquid state machine, etc.), and/or other types of machine learning models.

In at least one embodiment, training pipelines 1004 may include AI-assisted annotation. In at least one embodiment, labeled data 912 (e.g., traditional annotation) may be generated by any number of techniques. In at least one embodiment, labels or other annotations may be generated within a drawing program (e.g., an annotation program), a computer aided design (CAD) program, a labeling program, another type of program suitable for generating annotations or labels for ground truth, and/or may be hand drawn, in some examples. In at least one embodiment, ground truth data may be synthetically produced (e.g., generated from computer models or renderings), real produced (e.g., designed and produced from real-world data), machine-automated (e.g., using feature analysis and learning to extract features from data and then generate labels), human annotated (e.g., labeler, or annotation expert, defines location of labels), and/or a combination thereof. In at least one embodiment, for each instance of feedback data 908 (or other data type used by machine learning models), there may be corresponding ground truth data generated by training system 904. In at least one embodiment, AI-assisted annotation may be performed as part of deployment pipelines 1010; either in addition to, or in lieu of, AI-assisted annotation included in training pipelines 1004. In at least one embodiment, architecture 1000 may include a multi-layer platform that may include a software layer (e.g., software 918) of diagnostic applications (or other application types) that may perform one or more medical imaging and diagnostic functions.

In at least one embodiment, a software layer may be implemented as a secure, encrypted, and/or authenticated API through which applications or containers may be invoked (e.g., called) from an external environment(s), e.g., facility 902. In at least one embodiment, applications may then call or execute one or more services 920 for performing compute, AI, or visualization tasks associated with respective applications, and software 918 and/or services 920 may leverage hardware 922 to perform processing tasks in an effective and efficient manner.

In at least one embodiment, deployment system 906 may execute deployment pipelines 1010. In at least one embodiment, deployment pipelines 1010 may include any number of applications that may be sequentially, non-sequentially, or otherwise applied to feedback data (and/or other data types), including AI-assisted annotation, as described above. In at least one embodiment, as described herein, a deployment pipeline 1010 for an individual device may be referred to as a virtual instrument for a device. In at least one embodiment, for a single device, there may be more than one deployment pipeline 1010 depending on information desired from data generated by a device.

In at least one embodiment, applications available for deployment pipelines 1010 may include any application that may be used for performing processing tasks on feedback data or other data from devices. In at least one embodiment, because various applications may share common image operations, in some embodiments, a data augmentation library (e.g., as one of services 920) may be used to accelerate these operations. In at least one embodiment, to avoid bottlenecks of conventional processing approaches that rely on CPU processing, parallel computing platform 1030 may be used for GPU acceleration of these processing tasks.

In at least one embodiment, deployment system 906 may include a user interface (UI) 1014 (e.g., a graphical user interface, a web interface, etc.) that may be used to select applications for inclusion in deployment pipeline(s) 1010, arrange applications, modify or change applications or parameters or constructs thereof, use and interact with deployment pipeline(s) 1010 during set-up and/or deployment, and/or to otherwise interact with deployment system 906. In at least one embodiment, although not illustrated with respect to training system 904, UI 1014 (or a different user interface) may be used for selecting models for use in deployment system 906, for selecting models for training, or retraining, in training system 904, and/or for otherwise interacting with training system 904. In at least one embodiment, training system 904 and deployment system 906 may include DICOM adapters 1002A and 1002B.

In at least one embodiment, pipeline manager 1012 may be used, in addition to an application orchestration system 1028, to manage interaction between applications or containers of deployment pipeline(s) 1010 and services 920 and/or hardware 922. In at least one embodiment, pipeline manager 1012 may be configured to facilitate interactions from application to application, from application to service 920, and/or from application or service to hardware 922. In at least one embodiment, although illustrated as included in software 918, this is not intended to be limiting, and in some examples pipeline manager 1012 may be included in services 920. In at least one embodiment, application orchestration system 1028 (e.g., Kubernetes, DOCKER, etc.) may include a container orchestration system that may group applications into containers as logical units for coordination, management, scaling, and deployment. In at least one embodiment, by associating applications from deployment pipeline(s) 1010 (e.g., a reconstruction application, a segmentation application, etc.) with individual containers, each application may execute in a self-contained environment (e.g., at a kernel level) to increase speed and efficiency.

In at least one embodiment, each application and/or container (or image thereof) may be individually developed, modified, and deployed (e.g., a first user or developer may develop, modify, and deploy a first application and a second user or developer may develop, modify, and deploy a second application separate from a first user or developer), which may allow for focus on, and attention to, a task of a single application and/or container(s) without being hindered by tasks of other application(s) or container(s). In at least one embodiment, communication, and cooperation between different containers or applications may be aided by pipeline manager 1012 and application orchestration system 1028. In at least one embodiment, so long as an expected input and/or output of each container or application is known by a system (e.g., based on constructs of applications or containers), application orchestration system 1028 and/or pipeline manager 1012 may facilitate communication among and between, and sharing of resources among and between, each of applications or containers. In at least one embodiment, because one or more of applications or containers in deployment pipeline(s) 1010 may share the same services and resources, application orchestration system 1028 may orchestrate, load balance, and determine sharing of services or resources between and among various applications or containers. In at least one embodiment, a scheduler may be used to track resource requirements of applications or containers, current usage or planned usage of these resources, and resource availability. In at least one embodiment, the scheduler may thus allocate resources to different applications and distribute resources between and among applications in view of requirements and availability of a system. In some examples, the scheduler (and/or other component of application orchestration system 1028) may determine resource availability and distribution based on constraints imposed on a system (e.g., user constraints), such as quality of service (QoS), urgency of need for data outputs (e.g., to determine whether to execute real-time processing or delayed processing), etc.

In at least one embodiment, services 920 leveraged and shared by applications or containers in deployment system 906 may include compute services 1016, collaborative content creation services 1017, AI services 1018, simulation services 1019, visualization services 1020, and/or other service types. In at least one embodiment, applications may call (e.g., execute) one or more of services 920 to perform processing operations for an application. In at least one embodiment, compute services 1016 may be leveraged by applications to perform super-computing or other high-performance computing (HPC) tasks. In at least one embodiment, compute service(s) 1016 may be leveraged to perform parallel processing (e.g., using a parallel computing platform 1030) for processing data through one or more of applications and/or one or more tasks of a single application, substantially simultaneously. In at least one embodiment, parallel computing platform 1030 (e.g., NVIDIA's CUDA^{®}) may enable general purpose computing on GPUs (GPGPU) (e.g., GPUs 1022). In at least one embodiment, a software layer of parallel computing platform 1030 may provide access to virtual instruction sets and parallel computational elements of GPUs, for execution of compute kernels. In at least one embodiment, parallel computing platform 1030 may include memory and, in some embodiments, a memory may be shared between and among multiple containers, and/or between and among different processing tasks within a single container. In at least one embodiment, inter-process communication (IPC) calls may be generated for multiple containers and/or for multiple processes within a container to use same data from a shared segment of memory of parallel computing platform 1030 (e.g., where multiple different stages of an application or multiple applications are processing same information). In at least one embodiment, rather than making a copy of data and moving data to different locations in memory (e.g., a read/write operation), same data in the same location of a memory may be used for any number of processing tasks (e.g., at the same time, at different times, etc.). In at least one embodiment, as data is used to generate new data as a result of processing, this information of a new location of data may be stored and shared between various applications. In at least one embodiment, location of data and a location of updated or modified data may be part of a definition of how a payload is understood within containers.

In at least one embodiment, AI services 1018 may be leveraged to perform inferencing services for executing machine learning model(s) associated with applications (e.g., tasked with performing one or more processing tasks of an application). In at least one embodiment, AI services 1018 may leverage AI system 1024 to execute machine learning model(s) (e.g., neural networks, such as CNNs) for segmentation, reconstruction, object detection, feature detection, classification, and/or other inferencing tasks. In at least one embodiment, applications of deployment pipeline(s) 1010 may use one or more of output models 916 from training system 904 and/or other models of applications to perform inference on imaging data (e.g., DICOM data, RIS data, CIS data, REST compliant data, RPC data, raw data, etc.). In at least one embodiment, two or more examples of inferencing using application orchestration system 1028 (e.g., a scheduler) may be available. In at least one embodiment, a first category may include a high priority/low latency path that may achieve higher service level agreements, such as for performing inference on urgent requests during an emergency, or for a radiologist during diagnosis. In at least one embodiment, a second category may include a standard priority path that may be used for requests that may be non-urgent or where analysis may be performed at a later time. In at least one embodiment, application orchestration system 1028 may distribute resources (e.g., services 920 and/or hardware 922) based on priority paths for different inferencing tasks of AI services 1018.

In at least one embodiment, shared storage may be mounted to AI services 1018 within architecture 1000. In at least one embodiment, shared storage may operate as a cache (or other storage device type) and may be used to process inference requests from applications. In at least one embodiment, when an inference request is submitted, a request may be received by a set of API instances of deployment system 906, and one or more instances may be selected (e.g., for best fit, for load balancing, etc.) to process a request. In at least one embodiment, to process a request, a request may be entered into a database, a machine learning model may be located from model registry 924 if not already in a cache, a validation step may ensure appropriate machine learning model is loaded into a cache (e.g., shared storage), and/or a copy of a model may be saved to a cache. In at least one embodiment, the scheduler (e.g., of pipeline manager 1012) may be used to launch an application that is referenced in a request if an application is not already running or if there are not enough instances of an application. In at least one embodiment, if an inference server is not already launched to execute a model, an inference server may be launched. In at least one embodiment, any number of inference servers may be launched per model. In at least one embodiment, in a pull model, in which inference servers are clustered, models may be cached whenever load balancing is advantageous. In at least one embodiment, inference servers may be statically loaded in corresponding, distributed servers.

In at least one embodiment, inferencing may be performed using an inference server that runs in a container. In at least one embodiment, an instance of an inference server may be associated with a model (and optionally a plurality of versions of a model). In at least one embodiment, if an instance of an inference server does not exist when a request to perform inference on a model is received, a new instance may be loaded. In at least one embodiment, when starting an inference server, a model may be passed to an inference server such that a same container may be used to serve different models so long as the inference server is running as a different instance.

In at least one embodiment, during application execution, an inference request for a given application may be received, and a container (e.g., hosting an instance of an inference server) may be loaded (if not already loaded), and a start procedure may be called. In at least one embodiment, pre-processing logic in a container may load, decode, and/or perform any additional pre-processing on incoming data (e.g., using a CPU(s) and/or GPU(s)). In at least one embodiment, once data is prepared for inference, a container may perform inference as necessary on data. In at least one embodiment, this may include a single inference call on one image (e.g., a hand X-ray), or may require inference on hundreds of images (e.g., a chest CT). In at least one embodiment, an application may summarize results before completing, which may include, without limitation, a single confidence score, pixel level-segmentation, voxel-level segmentation, generating a visualization, or generating text to summarize findings. In at least one embodiment, different models or applications may be assigned different priorities. For example, some models may have a real-time (turnaround time less than one minute) priority while others may have lower priority (e.g., turnaround less than 10 minutes). In at least one embodiment, model execution times may be measured from requesting institution or entity and may include partner network traversal time, as well as execution on an inference service.

In at least one embodiment, transfer of requests between services 920 and inference applications may be hidden behind a software development kit (SDK), and robust transport may be provided through a queue. In at least one embodiment, a request is placed in a queue via an API for an individual application/tenant ID combination and an SDK pulls a request from a queue and gives a request to an application. In at least one embodiment, a name of a queue may be provided in an environment from where an SDK picks up the request. In at least one embodiment, asynchronous communication through a queue may be useful as it may allow any instance of an application to pick up work as it becomes available. In at least one embodiment, results may be transferred back through a queue, to ensure no data is lost. In at least one embodiment, queues may also provide an ability to segment work, as highest priority work may go to a queue with most instances of an application connected to it, while lowest priority work may go to a queue with a single instance connected to it that processes tasks in an order received. In at least one embodiment, an application may run on a GPU-accelerated instance generated in cloud 1026, and an inference service may perform inferencing on a GPU.

In at least one embodiment, visualization services 1020 may be leveraged to generate visualizations for viewing outputs of applications and/or deployment pipeline(s) 1010. In at least one embodiment, GPUs 1022 may be leveraged by visualization services 1020 to generate visualizations. In at least one embodiment, rendering effects, such as ray-tracing or other light transport simulation techniques, may be implemented by visualization services 1020 to generate higher quality visualizations. In at least one embodiment, visualizations may include, without limitation, 2D image renderings, 3D volume renderings, 3D volume reconstruction, 2D tomographic slices, virtual reality displays, augmented reality displays, etc. In at least one embodiment, virtualized environments may be used to generate a virtual interactive display or environment (e.g., a virtual environment) for interaction by users of a system (e.g., doctors, nurses, radiologists, etc.). In at least one embodiment, visualization services 1020 may include an internal visualizer, cinematics, and/or other rendering or image processing capabilities or functionality (e.g., ray tracing, rasterization, internal optics, etc.).

In at least one embodiment, hardware 922 may include GPUs 1022, AI system 1024, cloud 1026, and/or any other hardware used for executing training system 904 and/or deployment system 906. In at least one embodiment, GPUs 1022 (e.g., NVIDIA's TESLA^{®} and/or QUADRO^{®} GPUs) may include any number of GPUs that may be used for executing processing tasks of compute services 1016, collaborative content creation services 1017, AI services 1018, simulation services 1019, visualization services 1020, other services, and/or any of features or functionality of software 918. For example, with respect to AI services 1018, GPUs 1022 may be used to perform pre-processing on imaging data (or other data types used by machine learning models), post-processing on outputs of machine learning models, and/or to perform inferencing (e.g., to execute machine learning models). In at least one embodiment, cloud 1026, AI system 1024, and/or other components of architecture 1000 may use GPUs 1022. In at least one embodiment, cloud 1026 may include a GPU-optimized platform for deep learning tasks. In at least one embodiment, AI system 1024 may use GPUs, and cloud 1026 - or at least a portion tasked with deep learning or inferencing - may be executed using one or more AI systems 1024. As such, although hardware 922 is illustrated as discrete components, this is not intended to be limiting, and any components of hardware 922 may be combined with, or leveraged by, any other components of hardware 922.

In at least one embodiment, AI system 1024 may include a purpose-built computing system (e.g., a super-computer or an HPC) configured for inferencing, deep learning, machine learning, and/or other artificial intelligence tasks. In at least one embodiment, AI system 1024 (e.g., NVIDIA's DGX^{™}) may include GPU-optimized software (e.g., a software stack) that may be executed using a plurality of GPUs 1022, in addition to CPUs, RAM, storage, and/or other components, features, or functionality. In at least one embodiment, one or more AI systems 1024 may be implemented in cloud 1026 (e.g., in a data center) for performing some or all of AI-based processing tasks of architecture 1000.

In at least one embodiment, cloud 1026 may include a GPU-accelerated infrastructure (e.g., NVIDIA's NGC^{™}) that may provide a GPU-optimized platform for executing processing tasks of architecture 1000. In at least one embodiment, cloud 1026 may include an AI system(s) 1024 for performing one or more of AI-based tasks of architecture 1000 (e.g., as a hardware abstraction and scaling platform). In at least one embodiment, cloud 1026 may integrate with application orchestration system 1028 leveraging multiple GPUs to enable seamless scaling and load balancing between and among applications and services 920. In at least one embodiment, cloud 1026 may be tasked with executing at least some of services 920 of architecture 1000, including compute services 1016, AI services 1018, and/or visualization services 1020, as described herein. In at least one embodiment, cloud 1026 may perform small and large batch inference (e.g., executing NVIDIA's TensorRT^{™}), provide an accelerated parallel computing API and platform 1030 (e.g., NVIDIA's CUDA^{®}), execute application orchestration system 1028 (e.g., KUBERNETES), provide a graphics rendering API and platform (e.g., for ray-tracing, 2D graphics, 3D graphics, and/or other rendering techniques to produce higher quality cinematics), and/or may provide other functionality for architecture 1000.

In at least one embodiment, in an effort to preserve patient confidentiality (e.g., where patient data or records are to be used off-premises), cloud 1026 may include a registry, such as a deep learning container registry. In at least one embodiment, a registry may store containers for instantiations of applications that may perform pre-processing, post-processing, or other processing tasks on patient data. In at least one embodiment, cloud 1026 may receive data that includes patient data as well as sensor data in containers, perform requested processing for just sensor data in those containers, and then forward a resultant output and/or visualizations to appropriate parties and/or devices (e.g., on-premises medical devices used for visualization or diagnoses), all without having to extract, store, or otherwise access patient data. In at least one embodiment, confidentiality of patient data is preserved in compliance with HIPAA and/or other data regulations.

### EXAMPLE LANGUAGE MODELS

In at least some embodiments, language models, such as large language models (LLMs) and/or other types of generative artificial intelligence (AI) may be implemented. These models may be capable of understanding, summarizing, translating, and/or otherwise generating text (e.g., natural language text, code, etc.), images, video, computer aided design (CAD) assets, omniverse and/or metaverse file information (e.g., in USD format), and/or the like, based on the context provided in input prompts or queries. These language models may be considered "large," in embodiments, based on the models being trained on massive datasets and having architectures with large number of learnable network parameters (weights and biases) - such as millions or billions of parameters. The LLMs/VLMs/etc. may be implemented for summarizing textual data, analyzing and extracting insights from data (e.g., textual, image, video, etc.), and generating new text/image/video/etc. in user-specified styles, tones, or formats. The LLMs of the present disclosure may be used exclusively for text processing, in embodiments, whereas in other embodiments, multimodal LLMs may be implemented to accept, understand, and/or generate text along with other types of content like images, audio, and/or video. For example, vision language models (VLMs), or more generally multimodal language models, may be implemented to accept image, video, audio, textual, 3D design (e.g., CAD), and/or other inputs data types and/or to generate or output image, video, audio, textual, 3D design, and/or other output data types.

Various types of LLM/VLM/etc. architectures may be implemented in various embodiments. For example, different architectures may be implemented that use different techniques for understanding and generating outputs - such as text, audio, video, image, etc. In some embodiments, LLM architectures such as recurrent neural networks (RNNs) or long short-term memory networks (LSTMs) may be used, while in other embodiments transformer architectures - such as those that rely on self-attention mechanisms - may be used to understand and recognize relationships between words or tokens. The language models of the present disclosure may include encoder and/or decoder block(s). For example, discriminative or encoder-only LLMs like BERT (Bidirectional Encoder Representations from Transformers) may be implemented for tasks that involve language comprehension such as classification, sentiment analysis, question answering, and named entity recognition. As another example, generative or decoder-only LLMs like GPT (Generative Pretrained Transformer) may be implemented for tasks that involve language and content generation such as text completion, story generation, and dialogue generation. LLMs that include both encoder and decoder components like T5 (Text-to-Text Transformer) may be implemented to understand and generate content, such as for translation and summarization. These examples are not intended to be limiting, and any architecture type - including but not limited to those described herein - may be implemented depending on the particular embodiment and the task(s) being performed using the model(s).

In various embodiments, the LLMs/VLMs/etc. may be trained using unsupervised learning, in which an LLM learns patterns from large amounts of unlabeled text/audio/video/image/etc. data. Due to the extensive training, in embodiments, the models may not require task-specific or domain-specific training. LLMs that have undergone extensive pre-training on vast amounts of unlabeled text data may be referred to as foundation models and may be adept at a variety of tasks like question-answering, summarization, filling in missing information, and translation. Some LLMs may be tailored for a specific use case using techniques like prompt tuning, fine-tuning, retrieval augmented generation (RAG), adding adapters (e.g., customized neural networks, and/or neural network layers, that tune or adjust prompts or tokens to bias the language model toward a particular task or domain), and/or using other fine-tuning or tailoring techniques that optimize the models for use on particular tasks and/or within particular domains.

In some embodiments, the LLMs/VLMs/etc. of the present disclosure may be implemented using various model alignment techniques. For example, in some embodiments, guardrails may be implemented to identify improper or undesired inputs (e.g., prompts) and/or outputs of the models. In some non-limiting embodiments, the guardrails implemented may be similar to those described in U.S. Pat. App. No. 18,304,341, filed on April 20, 2023, the contents of which are hereby incorporated by reference in their entirety. In some embodiments, one or more additional models - or layers thereof - may be implemented to identify issues with inputs and/or outputs of the models. For example, these "safeguard" models may be trained to identify inputs and/or outputs that are "safe" or otherwise okay or desired and/or that are "unsafe" or are otherwise undesired for the particular application/embodiment. As a result, the LLMs/VLMs/etc. of the present disclosure may be less likely to output language/text/audio/etc. that may be offensive, vulgar, improper, unsafe, out of domain, and/or otherwise undesired for the particular application/embodiment.

In some embodiments, the LLMs/VLMs/etc. may be configured to or capable of accessing or using one or more plug-ins, application programming interfaces (APIs), databases, data stores, repositories, etc. For example, for certain tasks or operations that the model is not ideally suited for, the model may have instructions (e.g., as a result of training, and/or based on instructions in a given prompt) to access one or more plug-ins (e.g., 3rd party plugins) for help in processing the current input. In such an example, where at least part of a prompt is related to restaurants or weather, the model may access one or more restaurant or weather plug-ins (e.g., via one or more APIs) to retrieve the relevant information. As another example, where at least part of a response requires a mathematical computation, the model may access one or more math plug-ins or APIs for help in solving the problem(s), and may then use the response from the plug-in and/or API in the output from the model. This process may be repeated - e.g., recursively - for any number of iterations and using any number of plug-ins and/or APIs until a response to the input prompt can be generated that addresses each ask/question/request/process/operation/etc. As such, the model(s) may not only rely on its own knowledge from training on a large dataset(s), but also on the expertise or optimized nature of one or more external resources - such as APIs, plug-ins, and/or the like.

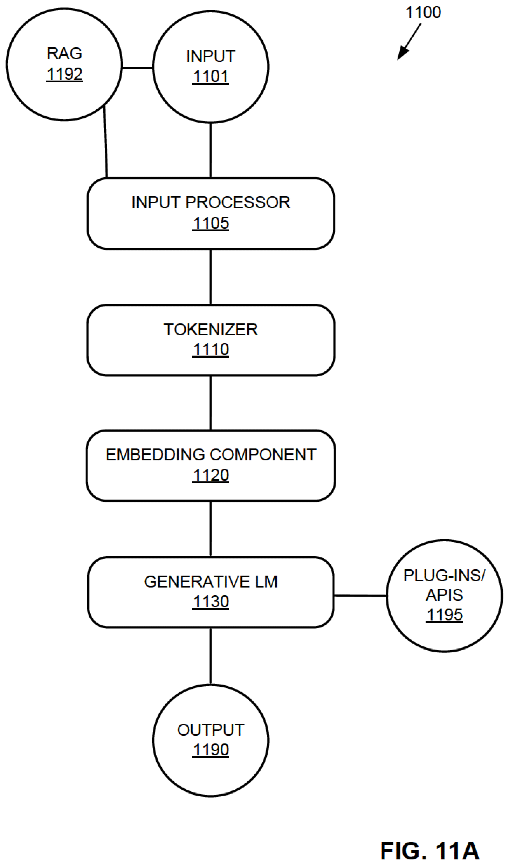

FIG. 11A is a block diagram of an example generative language model system 1100 suitable for use in implementing at least some embodiments of the present disclosure. In the example illustrated in FIG. 11A, the generative language model system 1100 includes a retrieval augmented generation (RAG) component 1192, an input processor 1105, a tokenizer 1110, an embedding component 1120, plug-ins/APIs 1195, and a generative language model (LM) 1130 (which may include an LLM, a SLM, a VLM, a multi-modal LM, etc.).

At a high level, the input processor 1105 may receive an input 1101 comprising text and/or other types of input data (e.g., audio data, video data, image data, sensor data (e.g., LiDAR, RADAR, ultrasonic, etc.), 3D design data, CAD data, universal scene descriptor (USD) data - such as OpenUSD, etc.), depending on the architecture of the generative LM 1130 (e.g., LLM/SLM/VLM/MMLM/etc.). In some embodiments, the input 1101 includes plain text in the form of one or more sentences, paragraphs, and/or documents. Additionally or alternatively, the input 1101 may include numerical sequences, precomputed embeddings (e.g., word or sentence embeddings), and/or structured data (e.g., in tabular formats, JSON, or XML). In some embodiments in which the generative LM 1130 is capable of processing multi-modal inputs, the input 1101 may combine text (or may omit text) with image data, audio data, video data, design data, USD data, and/or other types of input data, such as but not limited to those described herein. Taking raw input text as an example, the input processor 1105 may prepare raw input text in various ways. For example, the input processor 1105 may perform various types of text filtering to remove noise (e.g., special characters, punctuation, HTML tags, stopwords, portions of an image(s), portions of audio, etc.) from relevant textual content. In an example involving stopwords (common words that tend to carry little semantic meaning), the input processor 1105 may remove stopwords to reduce noise and focus the generative LM 1130 on more meaningful content. The input processor 1105 may apply text normalization, for example, by converting all characters to lowercase, removing accents, and/or or handling special cases like contractions or abbreviations to ensure consistency. These are just a few examples, and other types of input processing may be applied.

In some embodiments, a RAG component 1192 (which may include one or more RAG models, and/or may be performed using the generative LM 1130 itself) may be used to retrieve additional information to be used as part of the input 1101 or prompt. RAG may be used to enhance the input to the LLM/SLM/VLM/MMLM/etc. with external knowledge, so that answers to specific questions or queries or requests are more relevant - such as in a case where specific knowledge is required. The RAG component 1192 may fetch this additional information (e.g., grounding information, such as grounding text/image/video/audio/USD/CAD/etc.) from one or more external sources, which can then be fed to the LLM/SLM/VLM/MMLM/etc. along with the prompt to improve accuracy of the responses or outputs of the model.

For example, in some embodiments, the input 1101 may be generated using the query or input to the model (e.g., a question, a request, etc.) in addition to data retrieved using the RAG component 1192. In some embodiments, the input processor 1105 may analyze the input 1101 and communicate with the RAG component 1192 (or the RAG component 1192 may be part of the input processor 1105, in embodiments) in order to identify relevant text and/or other data to provide to the generative LM 1130 as additional context or sources of information from which to identify the response, answer, or output 1190, generally. For example, where the input indicates that the user is interested in a desired tire pressure for a particular make and model of vehicle, the RAG component 1192 may retrieve - using a RAG model performing a vector search in an embedding space, for example - the tire pressure information or the text corresponding thereto from a digital (embedded) version of the user manual for that particular vehicle make and model. Similarly, where a user revisits a chatbot related to a particular product offering or service, the RAG component 1192 may retrieve a prior stored conversation history - or at least a summary thereof - and include the prior conversation history along with the current ask/request as part of the input 1101 to the generative LM 1130.

The RAG component 1192 may use various RAG techniques. For example, naïve RAG may be used where documents are indexed, chunked, and applied to an embedding model to generate embeddings corresponding to the chunks. A user query may also be applied to the embedding model and/or another embedding model of the RAG component 1192 and the embeddings of the chunks along with the embeddings of the query may be compared to identify the most similar/related embeddings to the query, which may be supplied to the generative LM 1130 to generate an output.

In some embodiments, more advanced RAG techniques may be used. For example, prior to passing chunks to the embedding model, the chunks may undergo pre-retrieval processes (e.g., routing, rewriting, metadata analysis, expansion, etc.). In addition, prior to generating the final embeddings, post-retrieval processes (e.g., re-ranking, prompt compression, etc.) may be performed on the outputs of the embedding model prior to final embeddings being used as comparison to an input query.

As a further example, modular RAG techniques may be used, such as those that are similar to naïve and/or advanced RAG, but also include features such as hybrid search, recursive retrieval and query engines, StepBack approaches, sub-queries, and hypothetical document embedding.

As another example, Graph RAG may use knowledge graphs as a source of context or factual information. Graph RAG may be implemented using a graph database as a source of contextual information sent to the LLM/SLM/VLM/MMLM/etc. Rather than (or in addition to) providing the model with chunks of data extracted from larger sized documents - which may result in a lack of context, factual correctness, language accuracy, etc. - graph RAG may also provide structured entity information to the LLM/SLM/VLM/MMLM/etc. by combining the structured entity textual description with its many properties and relationships, allowing for deeper insights by the model. When implementing graph RAG, the systems and methods described herein use a graph as a content store and extract relevant chunks of documents and ask the LLM/SLM/VLM/MMLM/etc. to answer using them. The knowledge graph, in such embodiments, may contain relevant textual content and metadata about the knowledge graph as well as be integrated with a vector database. In some embodiments, the graph RAG may use a graph as a subject matter expert, where descriptions of concepts and entities relevant to a query/prompt may be extracted and passed to the model as semantic context. These descriptions may include relationships between the concepts. In other examples, the graph may be used as a database, where part of a query/prompt may be mapped to a graph query, the graph query may be executed, and the LLM/SLM/VLM/MMLM/etc. may summarize the results. In such an example, the graph may store relevant factual information, and a query (natural language query) to graph query tool (NL-to-Graph-query tool) and entity linking may be used. In some embodiments, graph RAG (e.g., using a graph database) may be combined with standard (e.g., vector database) RAG, and/or other RAG types, to benefit from multiple approaches.

In any embodiments, the RAG component 1192 may implement a plugin, API, user interface, and/or other functionality to perform RAG. For example, a graph RAG plug-in may be used by the LLM/SLM/VLM/MMLM/etc. to run queries against the knowledge graph to extract relevant information for feeding to the model, and a standard or vector RAG plug-in may be used to run queries against a vector database. For example, the graph database may interact with a plug-in's REST interface such that the graph database is decoupled from the vector database and/or the embeddings models.

The tokenizer 1110 may segment the (e.g., processed) text data into smaller units (tokens) for subsequent analysis and processing. The tokens may represent individual words, subwords, characters, portions of audio/video/image/etc., depending on the embodiment. Word-based tokenization divides the text into individual words, treating each word as a separate token. Subword tokenization breaks down words into smaller meaningful units (e.g., prefixes, suffixes, stems), enabling the generative LM 1130 to understand morphological variations and handle out-of-vocabulary words more effectively. Character-based tokenization represents each character as a separate token, enabling the generative LM 1130 to process text at a fine-grained level. The choice of tokenization strategy may depend on factors such as the language being processed, the task at hand, and/or characteristics of the training dataset. As such, the tokenizer 1110 may convert the (e.g., processed) text into a structured format according to tokenization schema being implemented in the particular embodiment.

The embedding component 1120 may use any known embedding technique to transform discrete tokens into (e.g., dense, continuous vector) representations of semantic meaning. For example, the embedding component 1120 may use pre-trained word embeddings (e.g., Word2Vec, GloVe, or FastText), one-hot encoding, Term Frequency-Inverse Document Frequency (TF-IDF) encoding, one or more embedding layers of a neural network, and/or otherwise.

In some embodiments in which the input 1101 includes image data/video data/etc., the input processor 1101 may resize the data to a standard size compatible with format of a corresponding input channel and/or may normalize pixel values to a common range (e.g., 0 to 1) to ensure a consistent representation, and the embedding component 1120 may encode the image data using any known technique (e.g., using one or more convolutional neural networks (CNNs) to extract visual features). In some embodiments in which the input 1101 includes audio data, the input processor 1101 may resample an audio file to a consistent sampling rate for uniform processing, and the embedding component 1120 may use any known technique to extract and encode audio features - such as in the form of a spectrogram, which is to be understood to include Fourier spectrograms, mel-spectrograms, wavelet spectrograms, time-domain filterbanks, custom filterbanks, learnable filterbanks, custom audio embeddings, and/or other forms of analog or digital intermediate audio representation, or a combination thereof. In some embodiments in which the input 1101 includes video data, the input processor 1101 may extract frames or apply resizing to extracted frames, and the embedding component 1120 may extract features such as optical flow embeddings or video embeddings and/or may encode temporal information or sequences of frames. In some embodiments in which the input 1101 includes multi-modal data, the embedding component 1120 may fuse representations of the different types of data (e.g., text, image, audio, USD, video, design, etc.) using techniques like early fusion (concatenation), late fusion (sequential processing), attention-based fusion (e.g., self-attention, cross-attention), etc.

The generative LM 1130 and/or other components of the generative LM system 1100 may use different types of neural network architectures depending on the embodiment. For example, transformer-based architectures such as those used in models like GPT may be implemented, and may include self-attention mechanisms that weigh the importance of different words or tokens in the input sequence and/or feedforward networks that process the output of the self-attention layers, applying non-linear transformations to the input representations and extracting higher-level features. Some non-limiting example architectures include transformers (e.g., encoder-decoder, decoder only, multi-modal), RNNs, LSTMs, fusion models, diffusion models, cross-modal embedding models that learn joint embedding spaces, graph neural networks (GNNs), hybrid architectures combining different types of architectures adversarial networks like generative adversarial networks or GANs or adversarial autoencoders (AAEs) for joint distribution learning, and others. As such, depending on the embodiment and architecture, the embedding component 1120 may apply an encoded representation of the input 1101 to the generative LM 1130, and the generative LM 1130 may process the encoded representation of the input 1101 to generate an output 1190, which may include responsive text and/or other types of data.

As described herein, in some embodiments, the generative LM 1130 may be configured to access or use - or capable of accessing or using - plug-ins/APIs 1195 (which may include one or more plug-ins, application programming interfaces (APIs), databases, data stores, repositories, etc.). For example, for certain tasks or operations that the generative LM 1130 is not ideally suited for, the model may have instructions (e.g., as a result of training, and/or based on instructions in a given prompt, such as those retrieved using the RAG component 1192) to access one or more plug-ins/APIs 1195 (e.g., 3^{rd} party plugins) for help in processing the current input. In such an example, where at least part of a prompt is related to restaurants or weather, the model may access one or more restaurant or weather plug-ins (e.g., via one or more APIs), send at least a portion of the prompt related to the particular plug-in/API 1195 to the plug-in/API 1195, the plug-in/API 1195 may process the information and return an answer to the generative LM 1130, and the generative LM 1130 may use the response to generate the output 1190. This process may be repeated - e.g., recursively - for any number of iterations and using any number of plug-ins/APIs 1195 until an output 1190 that addresses each ask/question/request/process/operation/etc. from the input 1101 can be generated. As such, the model(s) may not only rely on its own knowledge from training on a large dataset(s) and/or from data retrieved using the RAG component 1192, but also on the expertise or optimized nature of one or more external resources - such as the plug-ins/APIs 1195.

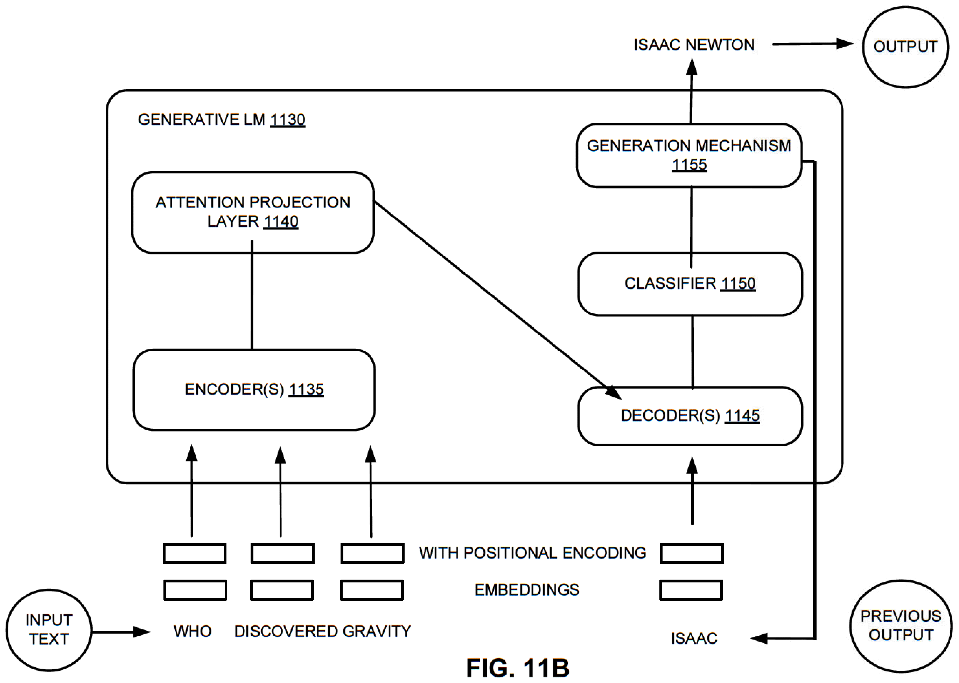

FIG. 11B is a block diagram of an example embodiment in which the generative LM 1130 includes a transformer encoder-decoder suitable for use in implementing at least some embodiments of the present disclosure. For example, assume input text such as "Who discovered gravity" is tokenized (e.g., by the tokenizer1110 of FIG. 11A) into tokens such as words, and each token is encoded (e.g., by the embedding component 1120 of FIG. 911A) into a corresponding embedding (e.g., of size 512). Since these token embeddings typically do not represent the position of the token in the input sequence, any known technique may be used to add a positional encoding to each token embedding to encode the sequential relationships and context of the tokens in the input sequence. As such, the (e.g., resulting) embeddings may be applied to one or more encoder(s) 1135 of the generative LM 1130.

In an example embodiment, the encoder(s) 1135 forms an encoder stack, where each encoder includes a self-attention layer and a feedforward network. In an example transformer architecture, each token (e.g., word) flows through a separate path. As such, each encoder may accept a sequence of vectors, passing each vector through the self-attention layer, then the feedforward network, and then upwards to the next encoder in the stack. Any known self-attention technique may be used. For example, to calculate a self-attention score for each token (word), a query vector, a key vector, and a value vector may be created for each token, a self-attention score may be calculated for pairs of tokens by taking the dot product of the query vector with the corresponding key vectors, normalizing the resulting scores, multiplying by corresponding value vectors, and summing weighted value vectors. The encoder may apply multi-headed attention in which the attention mechanism is applied multiple times in parallel with different learned weight matrices. Any number of encoders may be cascaded to generate a context vector encoding the input. An attention projection layer 1140 may convert the context vector into attention vectors (keys and values) for the decoder(s) 1145.

In an example embodiment, the decoder(s) 1145 form a decoder stack, where each decoder includes a self-attention layer, an encoder-decoder self-attention layer that uses the attention vectors (keys and values) from the encoder to focus on relevant parts of the input sequence, and a feedforward network. As with the encoder(s) 1135, in an example transformer architecture, each token (e.g., word) flows through a separate path in the decoder(s) 1145. During a first pass, the decoder(s) 1145, a classifier 1150, and a generation mechanism 1155 may generate a first token, and the generation mechanism 1155 may apply the generated token as an input during a second pass. The process may repeat in a loop, successively generating and adding tokens (e.g., words) to the output from the preceding pass and applying the token embeddings of the composite sequence with positional encodings as an input to the decoder(s) 1145 during a subsequent pass, sequentially generating one token at a time (known as auto-regression) until predicting a symbol or token that represents the end of the response. Within each decoder, the self-attention layer is typically constrained to attend only to preceding positions in the output sequence by applying a masking technique (e.g., setting future positions to negative infinity) before the softmax operation. In an example embodiment, the encoder-decoder attention layer operates similarly to the (e.g., multi-headed) self-attention in the encoder(s) 1135, except that it creates its queries from the layer below it and takes the keys and values (e.g., matrix) from the output of the encoder(s) 1135.

As such, the decoder(s) 1145 may output some decoded (e.g., vector) representation of the input being applied during a particular pass. The classifier 1150 may include a multi-class classifier comprising one or more neural network layers that project the decoded (e.g., vector) representation into a corresponding dimensionality (e.g., one dimension for each supported word or token in the output vocabulary) and a softmax operation that converts logits to probabilities. As such, the generation mechanism 1155 may select or sample a word or token based on a corresponding predicted probability (e.g., select the word with the highest predicted probability) and append it to the output from a previous pass, generating each word or token sequentially. The generation mechanism 1155 may repeat the process, triggering successive decoder inputs and corresponding predictions until selecting or sampling a symbol or token that represents the end of the response, at which point, the generation mechanism 1155 may output the generated response.

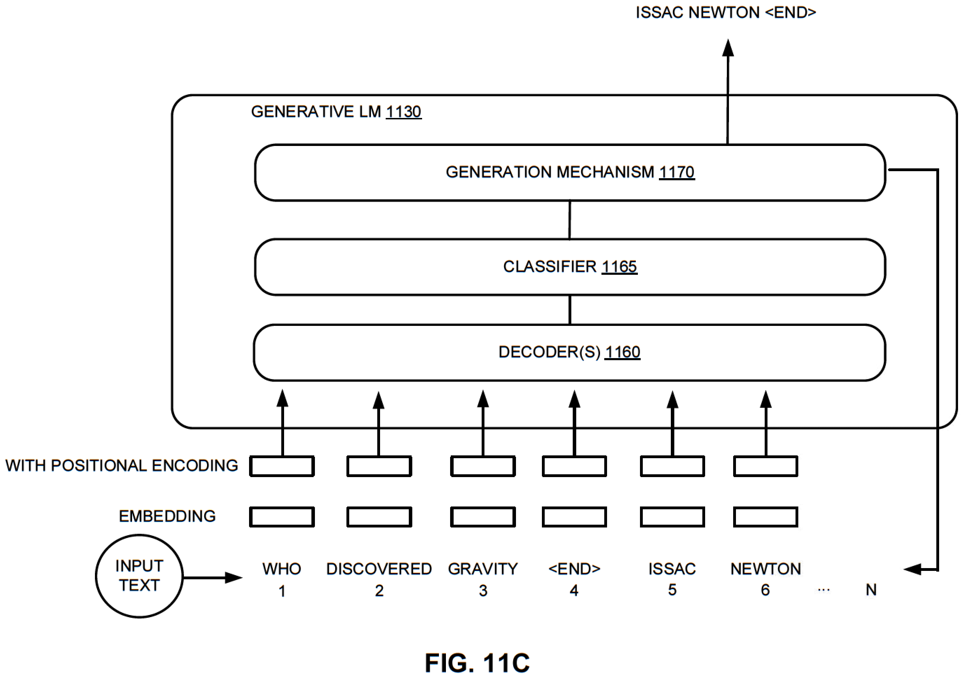

FIG. 11C is a block diagram of an example embodiment in which the generative LM 1130 includes a decoder-only transformer architecture suitable for use in implementing at least some embodiments of the present disclosure. For example, the decoder(s) 1160 of FIG. 11C may operate similarly as the decoder(s) 1145 of FIG. 11B except each of the decoder(s) 1160 of FIG. 11C omits the encoder-decoder self-attention layer (since there is no encoder in this embodiment). As such, the decoder(s) 1160 may form a decoder stack, where each decoder includes a self-attention layer and a feedforward network. Furthermore, instead of encoding the input sequence, a symbol or token representing the end of the input sequence (or the beginning of the output sequence) may be appended to the input sequence, and the resulting sequence (e.g., corresponding embeddings with positional encodings) may be applied to the decoder(s) 1160. As with the decoder(s) 1145 of FIG. 11B, each token (e.g., word) may flow through a separate path in the decoder(s) 1160, and the decoder(s) 1160, a classifier 1165, and a generation mechanism 1170 may use auto-regression to sequentially generate one token at a time until predicting a symbol or token that represents the end of the response. The classifier 1165 and the generation mechanism 1170 may operate similarly as the classifier 1150 and the generation mechanism 1155 of FIG. 11B, with the generation mechanism 1170 selecting or sampling each successive output token based on a corresponding predicted probability and appending it to the output from a previous pass, generating each token sequentially until selecting or sampling a symbol or token that represents the end of the response. These and other architectures described herein are meant simply as examples, and other suitable architectures may be implemented within the scope of the present disclosure.

### EXAMPLE COMPUTING DEVICE

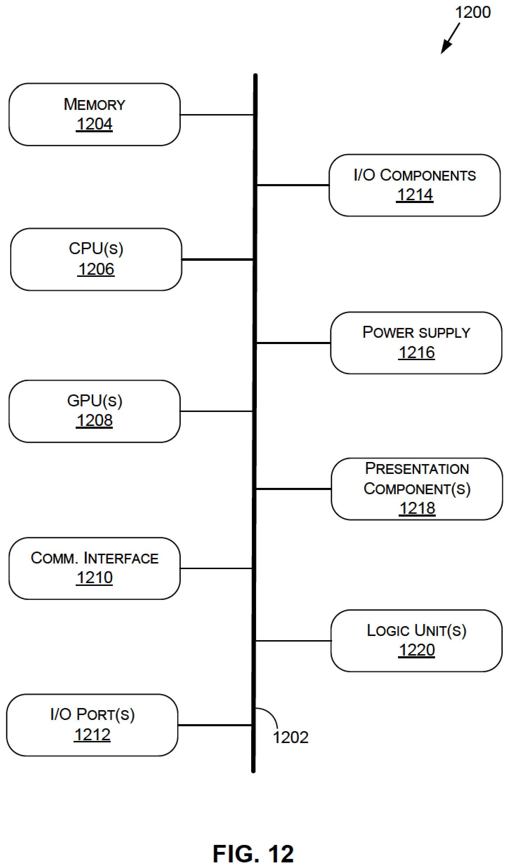

FIG. 12 is a block diagram of an example computing device(s) 1200 suitable for use in implementing some embodiments of the present disclosure. Computing device 1200 may include an interconnect system 1202 that directly or indirectly couples the following devices: memory 1204, one or more central processing units (CPUs) 1206, one or more graphics processing units (GPUs) 1208, a communication interface 1210, input/output (I/O) ports 1212, input/output components 1214, a power supply 1216, one or more presentation components 1218 (e.g., display(s)), and one or more logic units 1220. In at least one embodiment, the computing device(s) 1200 may comprise one or more virtual machines (VMs), and/or any of the components thereof may comprise virtual components (e.g., virtual hardware components). For non-limiting examples, one or more of the GPUs 1208 may comprise one or more vGPUs, one or more of the CPUs 1206 may comprise one or more vCPUs, and/or one or more of the logic units 1220 may comprise one or more virtual logic units. As such, a computing device(s) 1200 may include discrete components (e.g., a full GPU dedicated to the computing device 1200), virtual components (e.g., a portion of a GPU dedicated to the computing device 1200), or a combination thereof.

Although the various blocks of FIG. 12 are shown as connected via the interconnect system 1202 with lines, this is not intended to be limiting and is for clarity only. For example, in some embodiments, a presentation component 1218, such as a display device, may be considered an I/O component 1214 (e.g., if the display is a touch screen). As another example, the CPUs 1206 and/or GPUs 1208 may include memory (e.g., the memory 1204 may be representative of a storage device in addition to the memory of the GPUs 1208, the CPUs 1206, and/or other components). As such, the computing device of FIG. 12 is merely illustrative. Distinction is not made between such categories as "workstation," "server," "laptop," "desktop," "tablet," "client device," "mobile device," "hand-held device," "game console," "electronic control unit (ECU)," "virtual reality system," and/or other device or system types, as all are contemplated within the scope of the computing device of FIG. 12.

The interconnect system 1202 may represent one or more links or busses, such as an address bus, a data bus, a control bus, or a combination thereof. The interconnect system 1202 may include one or more bus or link types, such as an industry standard architecture (ISA) bus, an extended industry standard architecture (EISA) bus, a video electronics standards association (VESA) bus, a peripheral component interconnect (PCI) bus, a peripheral component interconnect express (PCIe) bus, and/or another type of bus or link. In some embodiments, there are direct connections between components. As an example, the CPU 1206 may be directly connected to the memory 1204. Further, the CPU 1206 may be directly connected to the GPU 1208. Where there is direct, or point-to-point connection between components, the interconnect system 1202 may include a PCIe link to carry out the connection. In these examples, a PCI bus need not be included in the computing device 1200.

The memory 1204 may include any of a variety of computer-readable media. The computer-readable media may be any available media that may be accessed by the computing device 1200. The computer-readable media may include both volatile and nonvolatile media, and removable and non-removable media. By way of example, and not limitation, the computer-readable media may comprise computer-storage media and communication media.

The computer-storage media may include both volatile and nonvolatile media and/or removable and non-removable media implemented in any method or technology for storage of information such as computer-readable instructions, data structures, program modules, and/or other data types. For example, the memory 1204 may store computer-readable instructions (e.g., that represent a program(s) and/or a program element(s), such as an operating system. Computer-storage media may include, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which may be used to store the desired information and which may be accessed by computing device 1200. As used herein, computer storage media does not comprise signals per se.

The computer storage media may embody computer-readable instructions, data structures, program modules, and/or other data types in a modulated data signal such as a carrier wave or other transport mechanism and includes any information delivery media. The term "modulated data signal" may refer to a signal that has one or more of its characteristics set or changed in such a manner as to encode information in the signal. By way of example, and not limitation, the computer storage media may include wired media such as a wired network or direct-wired connection, and wireless media such as acoustic, RF, infrared and other wireless media. Combinations of any of the above should also be included within the scope of computer-readable media.

The CPU(s) 1206 may be configured to execute at least some of the computer-readable instructions to control one or more components of the computing device 1200 to perform one or more of the methods and/or processes described herein. The CPU(s) 1206 may each include one or more cores (e.g., one, two, four, eight, twenty-eight, seventy-two, etc.) that are capable of handling a multitude of software threads simultaneously. The CPU(s) 1206 may include any type of processor, and may include different types of processors depending on the type of computing device 1200 implemented (e.g., processors with fewer cores for mobile devices and processors with more cores for servers). For example, depending on the type of computing device 1200, the processor may be an Advanced RISC Machines (ARM) processor implemented using Reduced Instruction Set Computing (RISC) or an x86 processor implemented using Complex Instruction Set Computing (CISC). The computing device 1200 may include one or more CPUs 1206 in addition to one or more microprocessors or supplementary co-processors, such as math co-processors.

In addition to or alternatively from the CPU(s) 1206, the GPU(s) 1208 may be configured to execute at least some of the computer-readable instructions to control one or more components of the computing device 1200 to perform one or more of the methods and/or processes described herein. One or more of the GPU(s) 1208 may be an integrated GPU (e.g., with one or more of the CPU(s) 1206 and/or one or more of the GPU(s) 1208 may be a discrete GPU. In embodiments, one or more of the GPU(s) 1208 may be a coprocessor of one or more of the CPU(s) 1206. The GPU(s) 1208 may be used by the computing device 1200 to render graphics (e.g., 3D graphics) or perform general purpose computations. For example, the GPU(s) 1208 may be used for General-Purpose computing on GPUs (GPGPU). The GPU(s) 1208 may include hundreds or thousands of cores that are capable of handling hundreds or thousands of software threads simultaneously. The GPU(s) 1208 may generate pixel data for output images in response to rendering commands (e.g., rendering commands from the CPU(s) 1206 received via a host interface). The GPU(s) 1208 may include graphics memory, such as display memory, for storing pixel data or any other suitable data, such as GPGPU data. The display memory may be included as part of the memory 1204. The GPU(s) 1208 may include two or more GPUs operating in parallel (e.g., via a link). The link may directly connect the GPUs (e.g., using NVLINK) or may connect the GPUs through a switch (e.g., using NVSwitch). When combined together, each GPU 1208 may generate pixel data or GPGPU data for different portions of an output or for different outputs (e.g., a first GPU for a first image and a second GPU for a second image). Each GPU may include its own memory, or may share memory with other GPUs.

In addition to or alternatively from the CPU(s) 1206 and/or the GPU(s) 1208, the logic unit(s) 1220 may be configured to execute at least some of the computer-readable instructions to control one or more components of the computing device 1200 to perform one or more of the methods and/or processes described herein. In embodiments, the CPU(s) 1206, the GPU(s) 1208, and/or the logic unit(s) 1220 may discretely or jointly perform any combination of the methods, processes and/or portions thereof. One or more of the logic units 1220 may be part of and/or integrated in one or more of the CPU(s) 1206 and/or the GPU(s) 1208 and/or one or more of the logic units 1220 may be discrete components or otherwise external to the CPU(s) 1206 and/or the GPU(s) 1208. In embodiments, one or more of the logic units 1220 may be a coprocessor of one or more of the CPU(s) 1206 and/or one or more of the GPU(s) 1208.

Examples of the logic unit(s) 1220 include one or more processing cores and/or components thereof, such as Data Processing Units (DPUs), Tensor Cores (TCs), Tensor Processing Units (TPUs), Pixel Visual Cores (PVCs), Vision Processing Units (VPUs), Graphics Processing Clusters (GPCs), Texture Processing Clusters (TPCs), Streaming Multiprocessors (SMs), Tree Traversal Units (TTUs), Artificial Intelligence Accelerators (AIAs), Deep Learning Accelerators (DLAs), Programmable Vision Accelerator (PVAs) - which may include one or more direct memory access (DMA) systems, one or more vision or vector processing units (VPUs), one or more pixel processing engines (PPEs), one or more decoupled accelerators (e.g., decoupled lookup table (DLUT) accelerators), etc., Vision Processing Units (VPUs), Optical Flow Accelerators (OFAs), Field Programmable Gate Arrays (FPGAs), Neuromorphic Chips, Quantum Processing Units (QPUs), Associative Process Units (APUs), Arithmetic-Logic Units (ALUs), Application-Specific Integrated Circuits (ASICs), Floating Point Units (FPUs), input/output (I/O) elements, peripheral component interconnect (PCI) or peripheral component interconnect express (PCIe) elements, and/or the like.

The communication interface 1210 may include one or more receivers, transmitters, and/or transceivers that allow the computing device 1200 to communicate with other computing devices via an electronic communication network, included wired and/or wireless communications. The communication interface 1210 may include components and functionality to allow communication over any of a number of different networks, such as wireless networks (e.g., Wi-Fi, Z-Wave, Bluetooth, Bluetooth LE, ZigBee, etc.), wired networks (e.g., communicating over Ethernet or InfiniBand), low-power wide-area networks (e.g., LoRaWAN, SigFox, etc.), and/or the Internet. In one or more embodiments, logic unit(s) 1220 and/or communication interface 1210 may include one or more data processing units (DPUs) to transmit data received over a network and/or through interconnect system 1202 directly to (e.g., a memory of) one or more GPU(s) 1208.

The I/O ports 1212 may allow the computing device 1200 to be logically coupled to other devices including the I/O components 1214, the presentation component(s) 1218, and/or other components, some of which may be built in to (e.g., integrated in) the computing device 1200. Illustrative I/O components 1214 include a microphone, mouse, keyboard, joystick, game pad, game controller, satellite dish, scanner, printer, wireless device, etc. The I/O components 1214 may provide a natural user interface (NUI) that processes air gestures, voice, or other physiological inputs generated by a user. In some instances, inputs may be transmitted to an appropriate network element for further processing. An NUI may implement any combination of speech recognition, stylus recognition, facial recognition, biometric recognition, gesture recognition both on screen and adjacent to the screen, air gestures, head and eye tracking, and touch recognition (as described in more detail below) associated with a display of the computing device 1200. The computing device 1200 may be include depth cameras, such as stereoscopic camera systems, infrared camera systems, RGB camera systems, touchscreen technology, and combinations of these, for gesture detection and recognition. Additionally, the computing device 1200 may include accelerometers or gyroscopes (e.g., as part of an inertia measurement unit (IMU)) that allow detection of motion. In some examples, the output of the accelerometers or gyroscopes may be used by the computing device 1200 to render immersive augmented reality or virtual reality.

The power supply 1216 may include a hard-wired power supply, a battery power supply, or a combination thereof. The power supply 1216 may provide power to the computing device 1200 to allow the components of the computing device 1200 to operate.

The presentation component(s) 1218 may include a display (e.g., a monitor, a touch screen, a television screen, a heads-up-display (HUD), other display types, or a combination thereof), speakers, and/or other presentation components. The presentation component(s) 1218 may receive data from other components (e.g., the GPU(s) 1208, the CPU(s) 1206, DPUs, etc.), and output the data (e.g., as an image, video, sound, etc.).

### EXAMPLE DATA CENTER

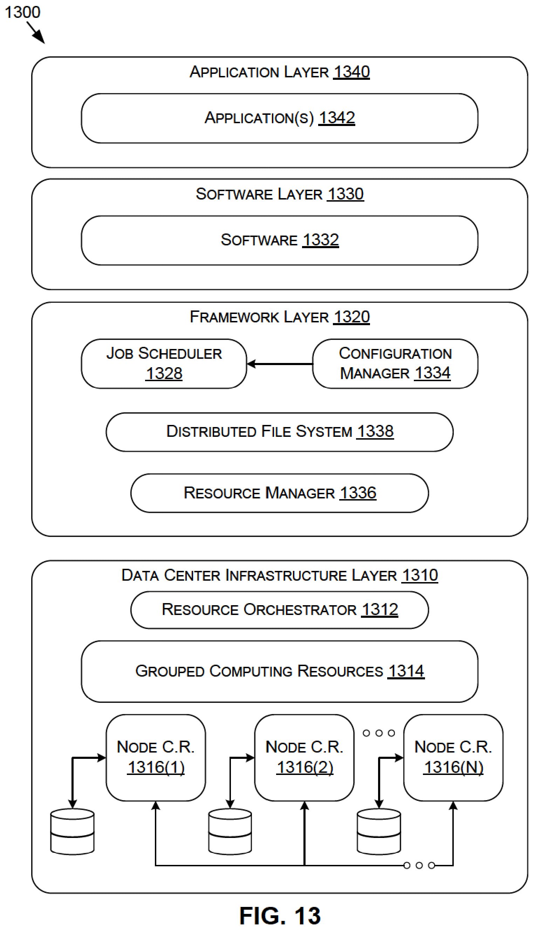

FIG. 13 illustrates an example data center 1300 that may be used in at least one embodiments of the present disclosure. The data center 1300 may include a data center infrastructure layer 1310, a framework layer 1320, a software layer 1330, and/or an application layer 1340.

As shown in FIG. 13, the data center infrastructure layer 1310 may include a resource orchestrator 1312, grouped computing resources 1314, and node computing resources ("node C.R.s") 1316(1)-1316(N), where "N" represents any whole, positive integer. In at least one embodiment, node C.R.s 1316(1)-1316(N) may include, but are not limited to, any number of central processing units (CPUs) or other processors (including DPUs, accelerators, field programmable gate arrays (FPGAs), graphics processors or graphics processing units (GPUs), etc.), memory devices (e.g., dynamic read-only memory), storage devices (e.g., solid state or disk drives), network input/output (NW I/O) devices, network switches, virtual machines (VMs), power modules, and/or cooling modules, etc. In some embodiments, one or more node C.R.s from among node C.R.s 1316(1)-1316(N) may correspond to a server having one or more of the above-mentioned computing resources. In addition, in some embodiments, the node C.R.s 1316(1)-13161(N) may include one or more virtual components, such as vGPUs, vCPUs, and/or the like, and/or one or more of the node C.R.s 1316(1)-1316(N) may correspond to a virtual machine (VM).

In at least one embodiment, grouped computing resources 1314 may include separate groupings of node C.R.s 1316 housed within one or more racks (not shown), or many racks housed in data centers at various geographical locations (also not shown). Separate groupings of node C.R.s 1316 within grouped computing resources 1314 may include grouped compute, network, memory or storage resources that may be configured or allocated to support one or more workloads. In at least one embodiment, several node C.R.s 1316 including CPUs, GPUs, DPUs, and/or other processors may be grouped within one or more racks to provide compute resources to support one or more workloads. The one or more racks may also include any number of power modules, cooling modules, and/or network switches, in any combination.

The resource orchestrator 1312 may configure or otherwise control one or more node C.R.s 1316(1)-1316(N) and/or grouped computing resources 1314. In at least one embodiment, resource orchestrator 1312 may include a software design infrastructure (SDI) management entity for the data center 1300. The resource orchestrator 1312 may include hardware, software, or some combination thereof.

In at least one embodiment, as shown in FIG. 13, framework layer 1320 may include a job scheduler 1328, a configuration manager 1334, a resource manager 1336, and/or a distributed file system 1338. The framework layer 1320 may include a framework to support software 1332 of software layer 1330 and/or one or more application(s) 1342 of application layer 1340. The software 1332 or application(s) 1342 may respectively include web-based service software or applications, such as those provided by Amazon Web Services, Google Cloud and Microsoft Azure. The framework layer 1320 may be, but is not limited to, a type of free and open-source software web application framework such as Apache SparkTM (hereinafter "Spark") that may use distributed file system 1338 for large-scale data processing (e.g., "big data"). In at least one embodiment, job scheduler 1328 may include a Spark driver to facilitate scheduling of workloads supported by various layers of data center 1300. The configuration manager 1334 may be capable of configuring different layers such as software layer 1330 and framework layer 1320 including Spark and distributed file system 1338 for supporting large-scale data processing. The resource manager 1336 may be capable of managing clustered or grouped computing resources mapped to or allocated for support of distributed file system 1338 and job scheduler 1328. In at least one embodiment, clustered or grouped computing resources may include grouped computing resource 1314 at data center infrastructure layer 1310. The resource manager 1336 may coordinate with resource orchestrator 1312 to manage these mapped or allocated computing resources.

In at least one embodiment, software 1332 included in software layer 1330 may include software used by at least portions of node C.R.s 1316(1)-1316(N), grouped computing resources 1314, and/or distributed file system 1338 of framework layer 1320. One or more types of software may include, but are not limited to, Internet web page search software, e-mail virus scan software, database software, and streaming video content software.

In at least one embodiment, application(s) 1342 included in application layer 1340 may include one or more types of applications used by at least portions of node C.R.s 1316(1)-1316(N), grouped computing resources 1314, and/or distributed file system 1338 of framework layer 1320. One or more types of applications may include, but are not limited to, any number of a genomics application, a cognitive compute, and a machine learning application, including training or inferencing software, machine learning framework software (e.g., PyTorch, TensorFlow, Caffe, etc.), and/or other machine learning applications used in conjunction with one or more embodiments.

In at least one embodiment, any of configuration manager 1334, resource manager 1336, and resource orchestrator 1312 may implement any number and type of self-modifying actions based on any amount and type of data acquired in any technically feasible fashion. Self-modifying actions may relieve a data center operator of data center 1300 from making possibly bad configuration decisions and possibly avoiding underutilized and/or poor performing portions of a data center.

The data center 1300 may include tools, services, software or other resources to train one or more machine learning models or predict or infer information using one or more machine learning models according to one or more embodiments described herein. For example, a machine learning model(s) may be trained by calculating weight parameters according to a neural network architecture using software and/or computing resources described above with respect to the data center 1300. In at least one embodiment, trained or deployed machine learning models corresponding to one or more neural networks may be used to infer or predict information using resources described above with respect to the data center 1300 by using weight parameters calculated through one or more training techniques, such as but not limited to those described herein.

In at least one embodiment, the data center 1300 may use CPUs, application-specific integrated circuits (ASICs), GPUs, FPGAs, and/or other hardware (or virtual compute resources corresponding thereto) to perform training and/or inferencing using above-described resources. Moreover, one or more software and/or hardware resources described above may be configured as a service to allow users to train or performing inferencing of information, such as image recognition, speech recognition, or other artificial intelligence services.

### EXAMPLE NETWORK ENVIRONMENTS

Network environments suitable for use in implementing embodiments of the disclosure may include one or more client devices, servers, network attached storage (NAS), other backend devices, and/or other device types. The client devices, servers, and/or other device types (e.g., each device) may be implemented on one or more instances of the computing device(s) 1200 of FIG. 12- e.g., each device may include similar components, features, and/or functionality of the computing device(s) 1200. In addition, where backend devices (e.g., servers, NAS, etc.) are implemented, the backend devices may be included as part of a data center 1300, an example of which is described in more detail herein with respect to FIG. 13.

Components of a network environment may communicate with each other via a network(s), which may be wired, wireless, or both. The network may include multiple networks, or a network of networks. By way of example, the network may include one or more Wide Area Networks (WANs), one or more Local Area Networks (LANs), one or more public networks such as the Internet and/or a public switched telephone network (PSTN), and/or one or more private networks. Where the network includes a wireless telecommunications network, components such as a base station, a communications tower, or even access points (as well as other components) may provide wireless connectivity.

Compatible network environments may include one or more peer-to-peer network environments - in which case a server may not be included in a network environment - and one or more client-server network environments - in which case one or more servers may be included in a network environment. In peer-to-peer network environments, functionality described herein with respect to a server(s) may be implemented on any number of client devices.

In at least one embodiment, a network environment may include one or more cloud-based network environments, a distributed computing environment, a combination thereof, etc. A cloud-based network environment may include a framework layer, a job scheduler, a resource manager, and a distributed file system implemented on one or more of servers, which may include one or more core network servers and/or edge servers. A framework layer may include a framework to support software of a software layer and/or one or more application(s) of an application layer. The software or application(s) may respectively include web-based service software or applications. In embodiments, one or more of the client devices may use the web-based service software or applications (e.g., by accessing the service software and/or applications via one or more application programming interfaces (APIs)). The framework layer may be, but is not limited to, a type of free and open-source software web application framework such as that may use a distributed file system for large-scale data processing (e.g., "big data").

A cloud-based network environment may provide cloud computing and/or cloud storage that carries out any combination of computing and/or data storage functions described herein (or one or more portions thereof). Any of these various functions may be distributed over multiple locations from central or core servers (e.g., of one or more data centers that may be distributed across a state, a region, a country, the globe, etc.). If a connection to a user (e.g., a client device) is relatively close to an edge server(s), a core server(s) may designate at least a portion of the functionality to the edge server(s). A cloud-based network environment may be private (e.g., limited to a single organization), may be public (e.g., available to many organizations), and/or a combination thereof (e.g., a hybrid cloud environment).

The client device(s) may include at least some of the components, features, and functionality of the example computing device(s) 1200 described herein with respect to FIG. 12. By way of example and not limitation, a client device may be embodied as a Personal Computer (PC), a laptop computer, a mobile device, a smartphone, a tablet computer, a smart watch, a wearable computer, a Personal Digital Assistant (PDA), an MP3 player, a virtual reality headset, a Global Positioning System (GPS) or device, a video player, a video camera, a surveillance device or system, a vehicle, a boat, a flying vessel, a virtual machine, a drone, a robot, a handheld communications device, a hospital device, a gaming device or system, an entertainment system, a vehicle computer system, an embedded system controller, a remote control, an appliance, a consumer electronic device, a workstation, an edge device, any combination of these delineated devices, or any other suitable device.

The disclosure may be described in the general context of computer code or machine-useable instructions, including computer-executable instructions such as program modules, being executed by a computer or other machine, such as a personal data assistant or other handheld device. Generally, program modules including routines, programs, objects, components, data structures, etc., refer to code that perform particular tasks or implement particular abstract data types. The disclosure may be practiced in a variety of system configurations, including hand-held devices, consumer electronics, general-purpose computers, more specialty computing devices, etc. The disclosure may also be practiced in distributed computing environments where tasks are performed by remote-processing devices that are linked through a communications network.

Other variations are within the spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. In at least one embodiment, use of the term "set" (e.g., "a set of items") or "subset" unless otherwise noted or contradicted by context, is to be construed as a nonempty collection comprising one or more members. Further, unless otherwise noted or contradicted by context, the term "subset" of a corresponding set does not necessarily denote a proper subset of the corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, the term "plurality" indicates a state of being plural (e.g., "a plurality of items" indicates multiple items). In at least one embodiment, a number of items in a plurality is at least two, but can be more when so indicated either explicitly or by context. Further, unless stated otherwise or otherwise clear from context, the phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in the form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. In at least one embodiment, set of non-transitory computer-readable storage media comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to the same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, the term "processor" may refer to any device or portion of a device that processes electronic data from registers and/or memory and transforms that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. In at least one embodiment, terms "system" and "method" are used herein interchangeably insofar as a system may embody one or more methods and methods may be considered a system.

In the present document, references may be made to obtaining, acquiring, receiving, or inputting analog or digital data into a subsystem, computer system, or computer-implemented machine. In at least one embodiment, a process of obtaining, acquiring, receiving, or inputting analog and digital data can be accomplished in a variety of ways such as by receiving data as a parameter of a function call or a call to an application programming interface. In at least one embodiment, processes of obtaining, acquiring, receiving, or inputting analog or digital data can be accomplished by transferring data via a serial or parallel interface. In at least one embodiment, processes of obtaining, acquiring, receiving, or inputting analog or digital data can be accomplished by transferring data via a computer network from providing entity to acquiring entity. In at least one embodiment, references may also be made to providing, outputting, transmitting, sending, or presenting analog or digital data. In various examples, processes of providing, outputting, transmitting, sending, or presenting analog or digital data can be accomplished by transferring data as an input or output parameter of a function call, a parameter of an application programming interface or interprocess communication mechanism.

Although descriptions herein set forth example embodiments of described techniques, other architectures may be used to implement described functionality, and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

## Claims

1. A method comprising:
obtaining a sequence of embeddings, at least one individual embedding of the sequence of embeddings representing a respective exchange of a sequence of exchanges of a conversation involving a language model (LM);
generating one or more metrics characterizing a trajectory defined by the sequence of embeddings in an embedding space;
determining, based at least on the one or more metrics, one or more attributes of the conversation; and
causing, based at least on the one or more attributes, execution of an action comprising one or more of:
interrupting the conversation,
retraining the LM, or
deploying the LM for one or more additional conversations involving the LM.

2. The method of claim 1, wherein obtaining the sequence of embeddings comprises at least one of:
accessing intermediate outputs of the LM, or
processing the sequence of exchanges using an embedding network external to the LM.

3. The method of claim 1 or 2, wherein the sequence of exchanges comprises at least one of:
a plurality of conversational entries generated by one participant of the conversation, or
a plurality of conversational entries generated by at least two participants of the conversation.

4. The method of any preceding claim, wherein the metrics comprise one or more of:
an extent of the trajectory over the sequence of exchanges of the conversation,
the extent of the trajectory normalized to a number of exchanges of the sequence of exchanges of the conversation,
the extent of the trajectory normalized to a length of the trajectory, or
an average length of the trajectory associated with one exchange of the sequence of exchanges of the conversation.

5. The method of any preceding claim, wherein the metrics comprise one or more of:
proximity to one or more disfavored locations in the embedding space that are indicative of the conversation being in violation of one or more policies of the LM, or
proximity to one or more favored locations in the embedding space that are indicative of a user satisfaction with performance of the LM.

6. The method of any preceding claim, wherein the one or more attributes comprise one or more of:
a degree of responsiveness to one or more queries directed to the LM, or
a degree of compliance of one or more responses of the LM with at least one policy associated with the LM.

7. The method of any preceding claim, wherein the one or more attributes comprise at least one efficacy attribute representative of one or more of:
quality of one or more responses of the LM to one or more queries directed to the LM,
relevance of the one or more responses of the LM to the one or more queries,
completeness of the one or more responses of the LM to the one or more queries, or
knowledge displayed by the LM in at least one area associated with the one or more queries.

8. The method of any preceding claim, wherein the one or more attributes comprises at least one safety attribute representative of one or more of:
a hate content,
a harassing content,
a profane content,
a violent content,
a self-harm content,
a threat content,
a minor-directed content,
an illegal weapon content,
a controlled substance content,
a crime-facilitating content,
a personally identifiable content,
a misinformation content,
a fraud content,
a copyright-infringing content,
a trademark-infringing content,
a plagiarism content,
an economic harm content,
a biological harm content,
an undesired content, or
a malware content.

9. The method of any preceding claim, wherein the one or more attributes comprises at least one safety attribute, and interrupting the conversation is responsive to the at least one safety attribute indicating a malicious attack on the LM.

10. The method of any preceding claim, wherein the interrupting the conversation is responsive to the one or more attributes indicating that multiple LM exchanges of the sequence of exchanges of the conversation are unresponsive to one or more queries directed to the LM, the method further comprising:
redirecting the conversation to one or more of (i) another LM or (ii) a human agent.

11. The method of any preceding claim, wherein the one or more attributes comprise at least one efficacy attribute, and the retraining the LM is responsive to the at least one efficacy attribute indicating at least one ineffective response, by the LM, to one or more queries directed to the LM.

12. The method of any preceding claim, wherein the one or more attributes comprise at least one efficacy attribute, and the causing the LM to be deployed for the one or more additional conversations involving the LM is responsive to the at least one efficacy attribute indicating effective responses, by the LM, to one or more queries directed to the LM.

13. A system comprising:
one or more processing units to:
obtain a sequence of embeddings, at least one individual embedding of the sequence of embeddings representing a respective exchange of a sequence of exchanges of a conversation involving a language model (LM);
generate one or more metrics characterizing a trajectory defined by the sequence of embeddings in an embedding space;
determine, based at least on the one or more metrics, one or more attributes of the conversation; and
cause, based at least on the one or more attributes, execution of an action comprising one or more of:
interrupting the conversation,
retraining the LM, or
deployment of the LM for one or more additional conversations involving the LM.

14. The system of claim 13, further being configured to carry out a method as mentioned in any of claims 2 to 12.

15. The system of claim 13 or 14, wherein the metrics comprise one or more of:
a reach of the trajectory over the sequence of exchanges of the conversation,
the reach of the trajectory normalized to a number of exchanges of the sequence of exchanges of the conversation,
the reach of the trajectory normalized to a length of the trajectory, or
an average length of the trajectory associated with one exchange of the sequence of exchanges of the conversation.

16. The system of any of claims 13 to 15, wherein the one or more processing units cause the interrupting the conversation responsive to the one or more attributes indicating at least one of:
a malicious attack on the LM, or
ineffective responses of the LM to one or more queries directed to the LM.

17. The system of any of claims 13 to 16, wherein at least one of the one or more attributes comprises an efficacy attribute, and the retraining the LM is responsive to the at least one efficacy attribute indicating at least one ineffective response, by the LM, to one or more queries directed to the LM.

18. The system of any of claims 13 to 17, wherein the system is comprised in at least one of:
an in-vehicle infotainment system for an autonomous or semi-autonomous machine;
a system for performing one or more simulation operations;
a system for performing one or more digital twin operations;
a system for performing light transport simulation;
a system for performing medical operations;
a system for performing factory operations;
a system for performing collaborative content creation for 3D assets;
a system for performing one or more deep learning operations;
a system implemented using an edge device;
a system for generating or presenting at least one of virtual reality content, mixed reality content, or augmented reality content;
a system implemented using a robot;
a system for performing one or more conversational AI operations;
a system implementing one or more language models;
a system implementing one or more large language models (LLMs);
a system implementing one or more small language models (SLMs);
a system implementing one or more vision language models (VLMs);
a system implementing one or more multi-modal language models (MMLMs);
a system implementing one or more vision-language-action (VLA) models;
a system implemented using an inference microservice that includes an operating-system (OS) level virtualization package and one or more machine learning models;
a system for performing one or more generative AI operations;
a system for generating synthetic data;
a system incorporating one or more virtual machines (VMs);
a system implemented at least partially in a data center; or
a system implemented at least partially using cloud computing resources; or
a system implemented at least partially using cloud computing resources.

19. One or more processors comprising circuitry to:
cause a language model (LM) service supporting a multiexchange user-LM conversation to interrupt the conversation based at least on one or more geometric features of a trajectory that circumscribes, in a multi-dimensional embedding space, a set of embeddings associated with individual exchanges of the conversation.
